# EUROPEAN PATENT SPECIFICATION

(11) **EP 4 210 425 B1**
(45) Date of publication and mention of the grant of the patent: **14.08.2024**
(21) Application number: 22150684.3
(22) Date of filing: 10.01.2022
(51) Int. Cl.: H04W 76/19, H04W 76/14, H04W 76/18, H04W 88/04

(54) **NETWORK ACCESS WHEN ASSOCIATED RELAY USER EQUIPMENT IS UNAVAILABLE**
NETZZUGRIFF, WENN ZUGEHÖRIGES RELAIS-BENUTZERGERÄT NICHT VERFÜGBAR IST
ACCÈS AU RÉSEAU LORSQUE L'ÉQUIPEMENT UTILISATEUR RELAIS ASSOCIÉ N'EST PAS DISPONIBLE

(43) Date of publication of application: 12.07.2023
(73) Proprietor: Nokia Technologies Oy, 02610 Espoo (FI)
(72) Inventor: PHAN, Vinh Van, 90100 Oulu (FI); YU, Ling, 02700 Kauniainen (FI); PRATAS, Nuno Manuel Kiilerich, 9260 Gistrup (DK); KESHAVAMURTHY, Prajwal, 81241 Munich (DE); SABOURI-SICHANI, Faranaz, 9220 Aalborg (DK); PANZNER, Berthold, 83607 Holzkirchen (DE)
(74) Representative: Page White Farrer

(56) References cited:
- WO-A1-2021/237058
- US-A1- 2018 152 986
- US-B1- 9 713 180

## Description

### Field of the disclosure

The present disclosure relates to an apparatus, a method, and a computer program for allowing a remote user equipment (e.g. wearable device or Internet of thing device) to get network access.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards. Further prior art is disclosed in WO 2021/237058 A1 (IDAC HOLDINGS INC [US]) 25 November 2021 and US 9 713 180 B1 (GUPTA PIYUSH [US] ET AL) 18 July 2017.

### Summary

The invention is carried out according to the appended independent claims. Optional features of the invention are carried out according to the dependent claims. According to the claimed invention, there is provided an apparatus comprising means for:
means for determining that a relay user equipment associated with the apparatus is unavailable; means for abstaining from attempting any direct network access and/or any indirect network access via another relay user equipment not associated with the apparatus during a time period; and means for attempting at least one indirect network access via the relay user equipment associated with the apparatus during the time period.

Attempting direct network access may comprise attempting to establish a direct connection (i.e. downlink and/or uplink connection) with the network.

Attempting indirect network access via another relay user equipment not associated with the apparatus may comprise attempting to discover the other relay user equipment not associated with the apparatus, select the other relay user equipment not associated with the apparatus and/or establish an indirect connection (i.e. sidelink connection) with the network via the other relay user equipment not associated with the apparatus.

Attempting indirect network access via the relay user equipment associated with the apparatus may comprise attempting to discover the relay user equipment associated with the apparatus, select the relay user equipment associated with the apparatus and/or establish an indirect connection (i.e. downlink and/or uplink connection) with the network via the relay user equipment associated with the apparatus.

The apparatus may comprise: in response to determining that an expected duration of unavailability of the relay user equipment associated with the apparatus is lower than a first threshold and an affordable delay for getting network access is greater than a second threshold, means for abstaining from attempting any direct network access and/or any indirect network access via the other relay user equipment not associated with the apparatus during the time period; and means for attempting at least one indirect network access via the relay user equipment associated with the apparatus during the time period.

The affordable delay for getting network access comprises an affordable delay for getting indirect network access via the relay user equipment associated with the apparatus, direct network access or indirect network access via the other relay user equipment not associated with the apparatus.

The apparatus may comprise: means for failing to get indirect network access via the relay user equipment associated with the apparatus during the time period; and means for attempting the direct network access and/or the indirect network access via the other relay user equipment not associated with the apparatus after the time period.

The apparatus may comprise: in response to determining that the expected duration of unavailability of the relay user equipment associated with the apparatus is greater than the first threshold or the affordable delay for getting network access is lower than the second threshold, means for attempting a direct network access and/or an indirect network access via another relay user equipment not associated with the apparatus during the time period; and means for abstaining from attempting at least one indirect network access via the relay user equipment associated with the apparatus during the time period.

Below the first threshold, the expected duration of unavailability of the relay user equipment associated with the apparatus may indicate that the relay user equipment associated with the apparatus is temporarily unavailable (unavailable for a short time period).

Above the first threshold, the expected duration of unavailability of the relay user equipment associated with the apparatus may indicate that the relay user equipment associated with the apparatus is not temporarily unavailable (unavailable for a long time period).

Below the second threshold, the affordable delay for getting network access may be too short to attempt at least one indirect network access via the relay user equipment associated with the apparatus during the time period and then, if necessary, attempt a direct network access and/or an indirect network access via the other relay user equipment not associated with the apparatus after the time period.

Above the second threshold, the affordable delay for getting network access may be long enough to attempt at least one indirect network access via the relay user equipment associated with the apparatus during the time period and then, if necessary, attempt a direct network access and/or an indirect network access via the other relay user equipment not associated with the apparatus after the time period.

Determining that the relay user equipment associated with the apparatus is unavailable may comprise: determining that a relay discovery announcement from the relay user equipment associated with the apparatus has not been received.

Determining that the relay user equipment associated with the apparatus is unavailable may comprise: determining that a relay discovery announcement from the relay user equipment associated with the apparatus has been received; sending a relay discovery solicitation to the relay user equipment associated with the apparatus; and receiving a response to the relay discovery solicitation indicating that the relay user equipment associated with the apparatus is unavailable or determining that a response to the relay discovery solicitation has not been received.

Determining that the relay user equipment associated with the apparatus is unavailable may comprise: broadcasting a relay discovery solicitation to a plurality of relay user equipment; receiving a response to the relay discovery solicitation indicating that the relay user equipment associated with the apparatus is unavailable or determining that a response to the relay discovery solicitation has not been received from the relay user equipment associated with the apparatus.

Determining that the relay user equipment associated with the apparatus is unavailable may comprise: receiving an indication of unavailability from the relay user equipment associated with the apparatus over a sidelink maintained between the apparatus and the relay user equipment associated with the apparatus. The indication of unavailability may comprise a cause of unavailability and/or an expected duration of unavailability of the relay user equipment associated with the apparatus.

The time period may be based on at least one of: an expected duration of unavailability of the relay user equipment associated with the apparatus; an affordable delay for getting network access; downlink conditions between the network and the apparatus; sidelink conditions between the relay user equipment associated with the apparatus and the apparatus; and an amount of data to be sent by the apparatus.

The expected duration of unavailability of the relay user equipment associated with the apparatus may be based on at least one of: a nature of the association between the apparatus and the relay user equipment associated with the apparatus; downlink conditions between the network and the apparatus; sidelink conditions between the relay user equipment associated with the apparatus and the apparatus; an indication of unavailability received from the relay user equipment associated with the apparatus; and a default duration of unavailability of the relay user equipment associated with the apparatus.

The nature of the association between the apparatus and the relay user equipment associated with the apparatus may comprise whether a permanent or semi-permanent association is configured.

The nature of the association between the apparatus and the relay user equipment associated with the apparatus may comprise an operation history between the apparatus and the relay user equipment associated with the apparatus.

The operation history may comprise at least one of: history of selecting the relay user equipment associated with the apparatus for indirect network access via the relay user equipment associated with the apparatus, history of maintaining a sidelink connection with the relay user equipment associated with the apparatus, history of using the relay user equipment associated with the apparatus for indirect network access via the relay user equipment associated with the apparatus for a time period, history of a number of relay user equipment reselection being triggered whilst using the relay user equipment associated with the apparatus for indirect network access via the relay user equipment associated with the apparatus.

The sidelink conditions between the apparatus and the relay user equipment associated with the apparatus comprises at least one of: whether a sidelink is maintained between the apparatus and the relay user equipment associated with the apparatus and sidelink conditions between the apparatus and the relay user equipment associated with the apparatus measured by the apparatus or the relay user equipment associated with the apparatus.

The indication of unavailability received from the relay user equipment associated with the apparatus may comprise at least one of a cause and duration of unavailability.

Determining the expected duration of unavailability of the relay user equipment associated with the apparatus may comprise: determining that the expected duration of unavailability of the relay user equipment associated with the apparatus is equal to a duration T1 if the downlink conditions between the network and the apparatus are greater than an upper threshold; determining that the expected duration of unavailability of the relay user equipment associated with the apparatus is equal to a duration T2 if the downlink conditions between the network and the apparatus are lower than the upper threshold and greater than or equal to a lower threshold, where the duration T2 is greater than the duration T1; and determining that the expected duration of unavailability of the relay user equipment associated with the apparatus is equal to a duration T3 if the downlink conditions between the network and the apparatus are lower than the lower threshold, where the duration T3 is greater than the duration T2.

Determining the expected duration of unavailability of the relay user equipment associated with the apparatus may comprise: determining the expected duration of unavailability of the relay user equipment associated with the apparatus based on variations of the downlink conditions between the network and the apparatus and mobility of the apparatus and the relay user equipment associated with the apparatus.

The affordable delay for getting network access may be based on at least one of: a quality of service class; packet delay budget of data to be sent by the apparatus; downlink conditions between the network and the apparatus; sidelink conditions between the relay user equipment associated with the apparatus and the apparatus; and a state of the apparatus.

Determining the affordable delay for getting network access may comprise: determining that the affordable delay for getting network access is equal to a duration t1 if a quality of service class is best effort; determining that the affordable delay for getting network access is equal to a duration t2 if the quality of service class is moderate time sensitive, wherein t2 is lower than or equal to t1; and determining that the affordable delay for getting network access is equal to a duration t3 if the quality of service class is strong time sensitive, wherein t3 is greater than or equal to zero and is lower than or equal to t2.

The affordable delay for getting network access may be greater when the apparatus is in idle state than when the apparatus is in inactive state.

The affordable delay for getting network access may be greater when a sidelink is maintained between the apparatus and the relay user equipment associated with the apparatus.

The time period may be the minimum of an expected duration of unavailability of the relay user equipment associated with the apparatus and an affordable delay for getting network access in addition to an expected direct network access delay and/or an indirect network access delay via another relay user equipment not associated with the apparatus.

According to an aspect there is provided an apparatus comprising at least one processor and at least one memory including computer code for one or more programs, the at least one memory and the computer code configured, with the at least one processor, to cause the apparatus at least to: determine that a relay user equipment associated with the apparatus is unavailable; abstain from attempting any direct network access and/or any indirect network access via another relay user equipment not associated with the apparatus during a time period; and attempt at least one indirect network access via the relay user equipment associated with the apparatus during the time period.

Attempting direct network access may comprise attempting to establish a direct connection (i.e. downlink and/or uplink connection) with the network.

Attempting indirect network access via another relay user equipment not associated with the apparatus may comprise attempting to discover the other relay user equipment not associated with the apparatus, select the other relay user equipment not associated with the apparatus and/or establish an indirect connection (i.e. sidelink connection) with the network via the other relay user equipment not associated with the apparatus.

Attempting indirect network access via the relay user equipment associated with the apparatus may comprise attempting to discover the relay user equipment associated with the apparatus, select the relay user equipment associated with the apparatus and/or establish an indirect connection (i.e. downlink and/or uplink connection) with the network via the relay user equipment associated with the apparatus.

The at least one memory and the computer code may be configured, with the at least one processor, to cause the apparatus at least to: in response to determining that an expected duration of unavailability of the relay user equipment associated with the apparatus is lower than a first threshold and an affordable delay for getting network access is greater than a second threshold, abstain from attempting any direct network access and/or any indirect network access via the other relay user equipment not associated with the apparatus during the time period; and attempt at least one indirect network access via the relay user equipment associated with the apparatus during the time period.

The affordable delay for getting network access comprises an affordable delay for getting indirect network access via the relay user equipment associated with the apparatus, direct network access or indirect network access via the other relay user equipment not associated with the apparatus.

The at least one memory and the computer code may be configured, with the at least one processor, to cause the apparatus at least to: fail to get indirect network access via the relay user equipment associated with the apparatus during the time period; and attempt the direct network access and/or the indirect network access via the other relay user equipment not associated with the apparatus after the time period.

The at least one memory and the computer code may be configured, with the at least one processor, to cause the apparatus at least to: in response to determining that the expected duration of unavailability of the relay user equipment associated with the apparatus is greater than the first threshold or the affordable delay for getting network access is lower than the second threshold, attempt a direct network access and/or an indirect network access via another relay user equipment not associated with the apparatus during the time period; and abstain from attempting at least one indirect network access via the relay user equipment associated with the apparatus during the time period.

Below the first threshold, the expected duration of unavailability of the relay user equipment associated with the apparatus may indicate that the relay user equipment associated with the apparatus is temporarily unavailable (unavailable for a short time period).

Above the first threshold, the expected duration of unavailability of the relay user equipment associated with the apparatus may indicate that the relay user equipment associated with the apparatus is not temporarily unavailable (unavailable for a long time period).

Below the second threshold, the affordable delay for getting network access may be too short to attempt at least one indirect network access via the relay user equipment associated with the apparatus during the time period and then, if necessary, attempt a direct network access and/or an indirect network access via the other relay user equipment not associated with the apparatus after the time period.

Above the second threshold, the affordable delay for getting network access may be long enough to attempt at least one indirect network access via the relay user equipment associated with the apparatus during the time period and then, if necessary, attempt a direct network access and/or an indirect network access via the other relay user equipment not associated with the apparatus after the time period.

Determining that the relay user equipment associated with the apparatus is unavailable may comprise: determining that a relay discovery announcement from the relay user equipment associated with the apparatus has not been received.

Determining that the relay user equipment associated with the apparatus is unavailable may comprise: determining that a relay discovery announcement from the relay user equipment associated with the apparatus has been received; sending a relay discovery solicitation to the relay user equipment associated with the apparatus; and receiving a response to the relay discovery solicitation indicating that the relay user equipment associated with the apparatus is unavailable or determining that a response to the relay discovery solicitation has not been received.

Determining that the relay user equipment associated with the apparatus is unavailable may comprise: broadcasting a relay discovery solicitation to a plurality of relay user equipment; receiving a response to the relay discovery solicitation indicating that the relay user equipment associated with the apparatus is unavailable or determining that a response to the relay discovery solicitation has not been received from the relay user equipment associated with the apparatus.

Determining that the relay user equipment associated with the apparatus is unavailable may comprise: receiving an indication of unavailability from the relay user equipment associated with the apparatus over a sidelink maintained between the apparatus and the relay user equipment associated with the apparatus. The indication of unavailability may comprise a cause of unavailability and/or an expected duration of unavailability of the relay user equipment associated with the apparatus.

The time period may be based on at least one of: an expected duration of unavailability of the relay user equipment associated with the apparatus; an affordable delay for getting network access; downlink conditions between the network and the apparatus; sidelink conditions between the relay user equipment associated with the apparatus and the apparatus; and an amount of data to be sent by the apparatus.

The expected duration of unavailability of the relay user equipment associated with the apparatus may be based on at least one of: a nature of the association between the apparatus and the relay user equipment associated with the apparatus; downlink conditions between the network and the apparatus; sidelink conditions between the relay user equipment associated with the apparatus and the apparatus; an indication of unavailability received from the relay user equipment associated with the apparatus; and a default duration of unavailability of the relay user equipment associated with the apparatus.

The nature of the association between the apparatus and the relay user equipment associated with the apparatus may comprise whether a permanent or semi-permanent association is configured.

The nature of the association between the apparatus and the relay user equipment associated with the apparatus may comprise an operation history between the apparatus and the relay user equipment associated with the apparatus.

The operation history may comprise at least one of: history of selecting the relay user equipment associated with the apparatus for indirect network access via the relay user equipment associated with the apparatus, history of maintaining a sidelink connection with the relay user equipment associated with the apparatus, history of using the relay user equipment associated with the apparatus for indirect network access via the relay user equipment associated with the apparatus for a time period, history of a number of relay user equipment reselection being triggered whilst using the relay user equipment associated with the apparatus for indirect network access via the relay user equipment associated with the apparatus.

The sidelink conditions between the apparatus and the relay user equipment associated with the apparatus comprises at least one of: whether a sidelink is maintained between the apparatus and the relay user equipment associated with the apparatus and sidelink conditions between the apparatus and the relay user equipment associated with the apparatus measured by the apparatus or the relay user equipment associated with the apparatus.

The indication of unavailability received from the relay user equipment associated with the apparatus may comprise at least one of a cause and duration of unavailability.

Determining the expected duration of unavailability of the relay user equipment associated with the apparatus may comprise: determining that the expected duration of unavailability of the relay user equipment associated with the apparatus is equal to a duration T1 if the downlink conditions between the network and the apparatus are greater than an upper threshold; determining that the expected duration of unavailability of the relay user equipment associated with the apparatus is equal to a duration T2 if the downlink conditions between the network and the apparatus are lower than the upper threshold and greater than or equal to a lower threshold, where the duration T2 is greater than the duration T1; and determining that the expected duration of unavailability of the relay user equipment associated with the apparatus is equal to a duration T3 if the downlink conditions between the network and the apparatus are lower than the lower threshold, where the duration T3 is greater than the duration T2.

Determining the expected duration of unavailability of the relay user equipment associated with the apparatus may comprise: determining the expected duration of unavailability of the relay user equipment associated with the apparatus based on variations of the downlink conditions between the network and the apparatus and mobility of the apparatus and the relay user equipment associated with the apparatus.

The affordable delay for getting network access may be based on at least one of: a quality of service class; packet delay budget of data to be sent by the apparatus; downlink conditions between the network and the apparatus; sidelink conditions between the relay user equipment associated with the apparatus and the apparatus; and a state of the apparatus.

Determining the affordable delay for getting network access may comprise: determining that the affordable delay for getting network access is equal to a duration t1 if a quality of service class is best effort; determining that the affordable delay for getting network access is equal to a duration t2 if the quality of service class is moderate time sensitive, wherein t2 is lower than or equal to t1; and determining that the affordable delay for getting network access is equal to a duration t3 if the quality of service class is strong time sensitive, wherein t3 is greater than or equal to zero and is lower than or equal to t2.

The affordable delay for getting network access may be greater when the apparatus is in idle state than when the apparatus is in inactive state.

The affordable delay for getting network access may be greater when a sidelink is maintained between the apparatus and the relay user equipment associated with the apparatus.

The time period may be the minimum of an expected duration of unavailability of the relay user equipment associated with the apparatus and an affordable delay for getting network access in addition to an expected direct network access delay and/or an indirect network access delay via another relay user equipment not associated with the apparatus.

According to an aspect there is provided an apparatus comprising circuitry configured to: determine that a relay user equipment associated with the apparatus is unavailable; abstain from attempting any direct network access and/or any indirect network access via another relay user equipment not associated with the apparatus during a time period; and attempt at least one indirect network access via the relay user equipment associated with the apparatus during the time period.

Attempting direct network access may comprise attempting to establish a direct connection (i.e. downlink and/or uplink connection) with the network.

Attempting indirect network access via another relay user equipment not associated with the apparatus may comprise attempting to discover the other relay user equipment not associated with the apparatus, select the other relay user equipment not associated with the apparatus and/or establish an indirect connection (i.e. sidelink connection) with the network via the other relay user equipment not associated with the apparatus.

Attempting indirect network access via the relay user equipment associated with the apparatus may comprise attempting to discover the relay user equipment associated with the apparatus, select the relay user equipment associated with the apparatus and/or establish an indirect connection (i.e. downlink and/or uplink connection) with the network via the relay user equipment associated with the apparatus.

The apparatus may comprise circuitry configured to: in response to determining that an expected duration of unavailability of the relay user equipment associated with the apparatus is lower than a first threshold and an affordable delay for getting network access is greater than a second threshold, abstain from attempting any direct network access and/or any indirect network access via the other relay user equipment not associated with the apparatus during the time period; and attempt at least one indirect network access via the relay user equipment associated with the apparatus during the time period.

The affordable delay for getting network access comprises an affordable delay for getting indirect network access via the relay user equipment associated with the apparatus, direct network access or indirect network access via the other relay user equipment not associated with the apparatus.

The apparatus may comprise circuitry configured to: fail to get indirect network access via the relay user equipment associated with the apparatus during the time period; and attempt the direct network access and/or the indirect network access via the other relay user equipment not associated with the apparatus after the time period.

The apparatus may comprise circuitry configured to: in response to determining that the expected duration of unavailability of the relay user equipment associated with the apparatus is greater than the first threshold or the affordable delay for getting network access is lower than the second threshold, attempt a direct network access and/or an indirect network access via another relay user equipment not associated with the apparatus during the time period; and abstain from attempting at least one indirect network access via the relay user equipment associated with the apparatus during the time period.

Below the first threshold, the expected duration of unavailability of the relay user equipment associated with the apparatus may indicate that the relay user equipment associated with the apparatus is temporarily unavailable (unavailable for a short time period).

Above the first threshold, the expected duration of unavailability of the relay user equipment associated with the apparatus may indicate that the relay user equipment associated with the apparatus is not temporarily unavailable (unavailable for a long time period).

Below the second threshold, the affordable delay for getting network access may be too short to attempt at least one indirect network access via the relay user equipment associated with the apparatus during the time period and then, if necessary, attempt a direct network access and/or an indirect network access via the other relay user equipment not associated with the apparatus after the time period.

Above the second threshold, the affordable delay for getting network access may be long enough to attempt at least one indirect network access via the relay user equipment associated with the apparatus during the time period and then, if necessary, attempt a direct network access and/or an indirect network access via the other relay user equipment not associated with the apparatus after the time period.

Determining that the relay user equipment associated with the apparatus is unavailable may comprise: determining that a relay discovery announcement from the relay user equipment associated with the apparatus has not been received.

Determining that the relay user equipment associated with the apparatus is unavailable may comprise: determining that a relay discovery announcement from the relay user equipment associated with the apparatus has been received; sending a relay discovery solicitation to the relay user equipment associated with the apparatus; and receiving a response to the relay discovery solicitation indicating that the relay user equipment associated with the apparatus is unavailable or determining that a response to the relay discovery solicitation has not been received.

Determining that the relay user equipment associated with the apparatus is unavailable may comprise: broadcasting a relay discovery solicitation to a plurality of relay user equipment; receiving a response to the relay discovery solicitation indicating that the relay user equipment associated with the apparatus is unavailable or determining that a response to the relay discovery solicitation has not been received from the relay user equipment associated with the apparatus.

Determining that the relay user equipment associated with the apparatus is unavailable may comprise: receiving an indication of unavailability from the relay user equipment associated with the apparatus over a sidelink maintained between the apparatus and the relay user equipment associated with the apparatus. The indication of unavailability may comprise a cause of unavailability and/or an expected duration of unavailability of the relay user equipment associated with the apparatus.

The time period may be based on at least one of: an expected duration of unavailability of the relay user equipment associated with the apparatus; an affordable delay for getting network access; downlink conditions between the network and the apparatus; sidelink conditions between the relay user equipment associated with the apparatus and the apparatus; and an amount of data to be sent by the apparatus.

The expected duration of unavailability of the relay user equipment associated with the apparatus may be based on at least one of: a nature of the association between the apparatus and the relay user equipment associated with the apparatus; downlink conditions between the network and the apparatus; sidelink conditions between the relay user equipment associated with the apparatus and the apparatus; an indication of unavailability received from the relay user equipment associated with the apparatus; and a default duration of unavailability of the relay user equipment associated with the apparatus.

The nature of the association between the apparatus and the relay user equipment associated with the apparatus may comprise whether a permanent or semi-permanent association is configured.

The nature of the association between the apparatus and the relay user equipment associated with the apparatus may comprise an operation history between the apparatus and the relay user equipment associated with the apparatus.

The operation history may comprise at least one of: history of selecting the relay user equipment associated with the apparatus for indirect network access via the relay user equipment associated with the apparatus, history of maintaining a sidelink connection with the relay user equipment associated with the apparatus, history of using the relay user equipment associated with the apparatus for indirect network access via the relay user equipment associated with the apparatus for a time period, history of a number of relay user equipment reselection being triggered whilst using the relay user equipment associated with the apparatus for indirect network access via the relay user equipment associated with the apparatus.

The sidelink conditions between the apparatus and the relay user equipment associated with the apparatus comprises at least one of: whether a sidelink is maintained between the apparatus and the relay user equipment associated with the apparatus and sidelink conditions between the apparatus and the relay user equipment associated with the apparatus measured by the apparatus or the relay user equipment associated with the apparatus.

The indication of unavailability received from the relay user equipment associated with the apparatus may comprise at least one of a cause and duration of unavailability.

Determining the expected duration of unavailability of the relay user equipment associated with the apparatus may comprise: determining that the expected duration of unavailability of the relay user equipment associated with the apparatus is equal to a duration T1 if the downlink conditions between the network and the apparatus are greater than an upper threshold; determining that the expected duration of unavailability of the relay user equipment associated with the apparatus is equal to a duration T2 if the downlink conditions between the network and the apparatus are lower than the upper threshold and greater than or equal to a lower threshold, where the duration T2 is greater than the duration T1; and determining that the expected duration of unavailability of the relay user equipment associated with the apparatus is equal to a duration T3 if the downlink conditions between the network and the apparatus are lower than the lower threshold, where the duration T3 is greater than the duration T2.

Determining the expected duration of unavailability of the relay user equipment associated with the apparatus may comprise: determining the expected duration of unavailability of the relay user equipment associated with the apparatus based on variations of the downlink conditions between the network and the apparatus and mobility of the apparatus and the relay user equipment associated with the apparatus.

The affordable delay for getting network access may be based on at least one of: a quality of service class; packet delay budget of data to be sent by the apparatus; downlink conditions between the network and the apparatus; sidelink conditions between the relay user equipment associated with the apparatus and the apparatus; and a state of the apparatus.

Determining the affordable delay for getting network access may comprise: determining that the affordable delay for getting network access is equal to a duration t1 if a quality of service class is best effort; determining that the affordable delay for getting network access is equal to a duration t2 if the quality of service class is moderate time sensitive, wherein t2 is lower than or equal to t1; and determining that the affordable delay for getting network access is equal to a duration t3 if the quality of service class is strong time sensitive, wherein t3 is greater than or equal to zero and is lower than or equal to t2.

The affordable delay for getting network access may be greater when the apparatus is in idle state than when the apparatus is in inactive state.

The affordable delay for getting network access may be greater when a sidelink is maintained between the apparatus and the relay user equipment associated with the apparatus.

The time period may be the minimum of an expected duration of unavailability of the relay user equipment associated with the apparatus and an affordable delay for getting network access in addition to an expected direct network access delay and/or an indirect network access delay via another relay user equipment not associated with the apparatus.

According to the claimed invention, there is provided a method comprising: determining that a relay user equipment associated with an apparatus is unavailable; abstaining from attempting any direct network access and/or any indirect network access via another relay user equipment not associated with the apparatus during a time period; and attempting at least one indirect network access via the relay user equipment associated with the apparatus during the time period.

Attempting direct network access may comprise attempting to establish a direct connection (i.e. downlink and/or uplink connection) with the network.

Attempting indirect network access via another relay user equipment not associated with the apparatus may comprise attempting to discover the other relay user equipment not associated with the apparatus, select the other relay user equipment not associated with the apparatus and/or establish an indirect connection (i.e. sidelink connection) with the network via the other relay user equipment not associated with the apparatus.

Attempting indirect network access via the relay user equipment associated with the apparatus may comprise attempting to discover the relay user equipment associated with the apparatus, select the relay user equipment associated with the apparatus and/or establish an indirect connection (i.e. downlink and/or uplink connection) with the network via the relay user equipment associated with the apparatus.

The method may comprise: in response to determining that an expected duration of unavailability of the relay user equipment associated with the apparatus is lower than a first threshold and an affordable delay for getting network access is greater than a second threshold, abstaining from attempting any direct network access and/or any indirect network access via the other relay user equipment not associated with the apparatus during the time period; and attempting at least one indirect network access via the relay user equipment associated with the apparatus during the time period.

The affordable delay for getting network access comprises an affordable delay for getting indirect network access via the relay user equipment associated with the apparatus, direct network access or indirect network access via the other relay user equipment not associated with the apparatus.

The method may comprise: failing to get indirect network access via the relay user equipment associated with the apparatus during the time period; and attempting the direct network access and/or the indirect network access via the other relay user equipment not associated with the apparatus after the time period.

The method may comprise: in response to determining that the expected duration of unavailability of the relay user equipment associated with the apparatus is greater than the first threshold or the affordable delay for getting network access is lower than the second threshold, attempting a direct network access and/or an indirect network access via another relay user equipment not associated with the apparatus during the time period; and abstaining from attempting at least one indirect network access via the relay user equipment associated with the apparatus during the time period.

Below the first threshold, the expected duration of unavailability of the relay user equipment associated with the apparatus may indicate that the relay user equipment associated with the apparatus is temporarily unavailable (unavailable for a short time period).

Above the first threshold, the expected duration of unavailability of the relay user equipment associated with the apparatus may indicate that the relay user equipment associated with the apparatus is not temporarily unavailable (unavailable for a long time period).

Below the second threshold, the affordable delay for getting network access may be too short to attempt at least one indirect network access via the relay user equipment associated with the apparatus during the time period and then, if necessary, attempt a direct network access and/or an indirect network access via the other relay user equipment not associated with the apparatus after the time period.

Above the second threshold, the affordable delay for getting network access may be long enough to attempt at least one indirect network access via the relay user equipment associated with the apparatus during the time period and then, if necessary, attempt a direct network access and/or an indirect network access via the other relay user equipment not associated with the apparatus after the time period.

Determining that the relay user equipment associated with the apparatus is unavailable may comprise: determining that a relay discovery announcement from the relay user equipment associated with the apparatus has not been received.

Determining that the relay user equipment associated with the apparatus is unavailable may comprise: determining that a relay discovery announcement from the relay user equipment associated with the apparatus has been received; sending a relay discovery solicitation to the relay user equipment associated with the apparatus; and receiving a response to the relay discovery solicitation indicating that the relay user equipment associated with the apparatus is unavailable or determining that a response to the relay discovery solicitation has not been received.

Determining that the relay user equipment associated with the apparatus is unavailable may comprise: broadcasting a relay discovery solicitation to a plurality of relay user equipment; receiving a response to the relay discovery solicitation indicating that the relay user equipment associated with the apparatus is unavailable or determining that a response to the relay discovery solicitation has not been received from the relay user equipment associated with the apparatus.

Determining that the relay user equipment associated with the apparatus is unavailable may comprise: receiving an indication of unavailability from the relay user equipment associated with the apparatus over a sidelink maintained between the apparatus and the relay user equipment associated with the apparatus. The indication of unavailability may comprise a cause of unavailability and/or an expected duration of unavailability of the relay user equipment associated with the apparatus.

The time period may be based on at least one of: an expected duration of unavailability of the relay user equipment associated with the apparatus; an affordable delay for getting network access; downlink conditions between the network and the apparatus; sidelink conditions between the relay user equipment associated with the apparatus and the apparatus; and an amount of data to be sent by the apparatus.

The expected duration of unavailability of the relay user equipment associated with the apparatus may be based on at least one of: a nature of the association between the apparatus and the relay user equipment associated with the apparatus; downlink conditions between the network and the apparatus; sidelink conditions between the relay user equipment associated with the apparatus and the apparatus; an indication of unavailability received from the relay user equipment associated with the apparatus; and a default duration of unavailability of the relay user equipment associated with the apparatus.

The nature of the association between the apparatus and the relay user equipment associated with the apparatus may comprise whether a permanent or semi-permanent association is configured.

The nature of the association between the apparatus and the relay user equipment associated with the apparatus may comprise an operation history between the apparatus and the relay user equipment associated with the apparatus.

The operation history may comprise at least one of: history of selecting the relay user equipment associated with the apparatus for indirect network access via the relay user equipment associated with the apparatus, history of maintaining a sidelink connection with the relay user equipment associated with the apparatus, history of using the relay user equipment associated with the apparatus for indirect network access via the relay user equipment associated with the apparatus for a time period, history of a number of relay user equipment reselection being triggered whilst using the relay user equipment associated with the apparatus for indirect network access via the relay user equipment associated with the apparatus.

The sidelink conditions between the apparatus and the relay user equipment associated with the apparatus comprises at least one of: whether a sidelink is maintained between the apparatus and the relay user equipment associated with the apparatus and sidelink conditions between the apparatus and the relay user equipment associated with the apparatus measured by the apparatus or the relay user equipment associated with the apparatus.

The indication of unavailability received from the relay user equipment associated with the apparatus may comprise at least one of a cause and duration of unavailability.

Determining the expected duration of unavailability of the relay user equipment associated with the apparatus may comprise: determining that the expected duration of unavailability of the relay user equipment associated with the apparatus is equal to a duration T1 if the downlink conditions between the network and the apparatus are greater than an upper threshold; determining that the expected duration of unavailability of the relay user equipment associated with the apparatus is equal to a duration T2 if the downlink conditions between the network and the apparatus are lower than the upper threshold and greater than or equal to a lower threshold, where the duration T2 is greater than the duration T1; and determining that the expected duration of unavailability of the relay user equipment associated with the apparatus is equal to a duration T3 if the downlink conditions between the network and the apparatus are lower than the lower threshold, where the duration T3 is greater than the duration T2.

Determining the expected duration of unavailability of the relay user equipment associated with the apparatus may comprise: determining the expected duration of unavailability of the relay user equipment associated with the apparatus based on variations of the downlink conditions between the network and the apparatus and mobility of the apparatus and the relay user equipment associated with the apparatus.

The affordable delay for getting network access may be based on at least one of: a quality of service class; packet delay budget of data to be sent by the apparatus; downlink conditions between the network and the apparatus; sidelink conditions between the relay user equipment associated with the apparatus and the apparatus; and a state of the apparatus.

Determining the affordable delay for getting network access may comprise:
determining that the affordable delay for getting network access is equal to a duration t1 if a quality of service class is best effort; determining that the affordable delay for getting network access is equal to a duration t2 if the quality of service class is moderate time sensitive, wherein t2 is lower than or equal to t1; and
determining that the affordable delay for getting network access is equal to a duration t3 if the quality of service class is strong time sensitive, wherein t3 is greater than or equal to zero and is lower than or equal to t2.

The affordable delay for getting network access may be greater when the apparatus is in idle state than when the apparatus is in inactive state.

The affordable delay for getting network access may be greater when a sidelink is maintained between the apparatus and the relay user equipment associated with the apparatus.

The time period may be the minimum of an expected duration of unavailability of the relay user equipment associated with the apparatus and an affordable delay for getting network access in addition to an expected direct network access delay and/or an indirect network access delay via another relay user equipment not associated with the apparatus.

According to the claimed invention, there is provided a computer program comprising computer executable code which when run on at least one processor is configured to: determine that a relay user equipment associated with an apparatus is unavailable; abstain from attempting any direct network access and/or any indirect network access via another relay user equipment not associated with the apparatus during a time period; and attempt at least one indirect network access via the relay user equipment associated with the apparatus during the time period.

Attempting direct network access may comprise attempting to establish a direct connection (i.e. downlink and/or uplink connection) with the network.

Attempting indirect network access via another relay user equipment not associated with the apparatus may comprise attempting to discover the other relay user equipment not associated with the apparatus, select the other relay user equipment not associated with the apparatus and/or establish an indirect connection (i.e. sidelink connection) with the network via the other relay user equipment not associated with the apparatus.

Attempting indirect network access via the relay user equipment associated with the apparatus may comprise attempting to discover the relay user equipment associated with the apparatus, select the relay user equipment associated with the apparatus and/or establish an indirect connection (i.e. downlink and/or uplink connection) with the network via the relay user equipment associated with the apparatus.

The computer program may comprise computer executable code which when run on at least one processor is configured to: in response to determining that an expected duration of unavailability of the relay user equipment associated with the apparatus is lower than a first threshold and an affordable delay for getting network access is greater than a second threshold, abstain from attempting any direct network access and/or any indirect network access via the other relay user equipment not associated with the apparatus during the time period; and attempt at least one indirect network access via the relay user equipment associated with the apparatus during the time period.

The affordable delay for getting network access comprises an affordable delay for getting indirect network access via the relay user equipment associated with the apparatus, direct network access or indirect network access via the other relay user equipment not associated with the apparatus.

The computer program may comprise computer executable code which when run on at least one processor is configured to: fail to get indirect network access via the relay user equipment associated with the apparatus during the time period; and attempt the direct network access and/or the indirect network access via the other relay user equipment not associated with the apparatus after the time period.

The computer program may comprise computer executable code which when run on at least one processor is configured to: in response to determining that the expected duration of unavailability of the relay user equipment associated with the apparatus is greater than the first threshold or the affordable delay for getting network access is lower than the second threshold, attempt a direct network access and/or an indirect network access via another relay user equipment not associated with the apparatus during the time period; and abstain from attempting at least one indirect network access via the relay user equipment associated with the apparatus during the time period.

Below the first threshold, the expected duration of unavailability of the relay user equipment associated with the apparatus may indicate that the relay user equipment associated with the apparatus is temporarily unavailable (unavailable for a short time period).

Above the first threshold, the expected duration of unavailability of the relay user equipment associated with the apparatus may indicate that the relay user equipment associated with the apparatus is not temporarily unavailable (unavailable for a long time period).

Below the second threshold, the affordable delay for getting network access may be too short to attempt at least one indirect network access via the relay user equipment associated with the apparatus during the time period and then, if necessary, attempt a direct network access and/or an indirect network access via the other relay user equipment not associated with the apparatus after the time period.

Above the second threshold, the affordable delay for getting network access may be long enough to attempt at least one indirect network access via the relay user equipment associated with the apparatus during the time period and then, if necessary, attempt a direct network access and/or an indirect network access via the other relay user equipment not associated with the apparatus after the time period.

Determining that the relay user equipment associated with the apparatus is unavailable may comprise: determining that a relay discovery announcement from the relay user equipment associated with the apparatus has not been received.

Determining that the relay user equipment associated with the apparatus is unavailable may comprise: determining that a relay discovery announcement from the relay user equipment associated with the apparatus has been received; sending a relay discovery solicitation to the relay user equipment associated with the apparatus; and receiving a response to the relay discovery solicitation indicating that the relay user equipment associated with the apparatus is unavailable or determining that a response to the relay discovery solicitation has not been received.

Determining that the relay user equipment associated with the apparatus is unavailable may comprise: broadcasting a relay discovery solicitation to a plurality of relay user equipment; receiving a response to the relay discovery solicitation indicating that the relay user equipment associated with the apparatus is unavailable or determining that a response to the relay discovery solicitation has not been received from the relay user equipment associated with the apparatus.

Determining that the relay user equipment associated with the apparatus is unavailable may comprise: receiving an indication of unavailability from the relay user equipment associated with the apparatus over a sidelink maintained between the apparatus and the relay user equipment associated with the apparatus. The indication of unavailability may comprise a cause of unavailability and/or an expected duration of unavailability of the relay user equipment associated with the apparatus.

The time period may be based on at least one of: an expected duration of unavailability of the relay user equipment associated with the apparatus; an affordable delay for getting network access; downlink conditions between the network and the apparatus; sidelink conditions between the relay user equipment associated with the apparatus and the apparatus; and an amount of data to be sent by the apparatus.

The expected duration of unavailability of the relay user equipment associated with the apparatus may be based on at least one of: a nature of the association between the apparatus and the relay user equipment associated with the apparatus; downlink conditions between the network and the apparatus; sidelink conditions between the relay user equipment associated with the apparatus and the apparatus; an indication of unavailability received from the relay user equipment associated with the apparatus; and a default duration of unavailability of the relay user equipment associated with the apparatus.

The nature of the association between the apparatus and the relay user equipment associated with the apparatus may comprise whether a permanent or semi-permanent association is configured.

The nature of the association between the apparatus and the relay user equipment associated with the apparatus may comprise an operation history between the apparatus and the relay user equipment associated with the apparatus.

The operation history may comprise at least one of: history of selecting the relay user equipment associated with the apparatus for indirect network access via the relay user equipment associated with the apparatus, history of maintaining a sidelink connection with the relay user equipment associated with the apparatus, history of using the relay user equipment associated with the apparatus for indirect network access via the relay user equipment associated with the apparatus for a time period, history of a number of relay user equipment reselection being triggered whilst using the relay user equipment associated with the apparatus for indirect network access via the relay user equipment associated with the apparatus.

The sidelink conditions between the apparatus and the relay user equipment associated with the apparatus comprises at least one of: whether a sidelink is maintained between the apparatus and the relay user equipment associated with the apparatus and sidelink conditions between the apparatus and the relay user equipment associated with the apparatus measured by the apparatus or the relay user equipment associated with the apparatus.

The indication of unavailability received from the relay user equipment associated with the apparatus may comprise at least one of a cause and duration of unavailability.

Determining the expected duration of unavailability of the relay user equipment associated with the apparatus may comprise: determining that the expected duration of unavailability of the relay user equipment associated with the apparatus is equal to a duration T1 if the downlink conditions between the network and the apparatus are greater than an upper threshold; determining that the expected duration of unavailability of the relay user equipment associated with the apparatus is equal to a duration T2 if the downlink conditions between the network and the apparatus are lower than the upper threshold and greater than or equal to a lower threshold, where the duration T2 is greater than the duration T1; and determining that the expected duration of unavailability of the relay user equipment associated with the apparatus is equal to a duration T3 if the downlink conditions between the network and the apparatus are lower than the lower threshold, where the duration T3 is greater than the duration T2.

Determining the expected duration of unavailability of the relay user equipment associated with the apparatus may comprise: determining the expected duration of unavailability of the relay user equipment associated with the apparatus based on variations of the downlink conditions between the network and the apparatus and mobility of the apparatus and the relay user equipment associated with the apparatus.

The affordable delay for getting network access may be based on at least one of: a quality of service class; packet delay budget of data to be sent by the apparatus; downlink conditions between the network and the apparatus; sidelink conditions between the relay user equipment associated with the apparatus and the apparatus; and a state of the apparatus.

Determining the affordable delay for getting network access may comprise: determining that the affordable delay for getting network access is equal to a duration t1 if a quality of service class is best effort; determining that the affordable delay for getting network access is equal to a duration t2 if the quality of service class is moderate time sensitive, wherein t2 is lower than or equal to t1; and determining that the affordable delay for getting network access is equal to a duration t3 if the quality of service class is strong time sensitive, wherein t3 is greater than or equal to zero and is lower than or equal to t2.

The affordable delay for getting network access may be greater when the apparatus is in idle state than when the apparatus is in inactive state.

The affordable delay for getting network access may be greater when a sidelink is maintained between the apparatus and the relay user equipment associated with the apparatus.

The time period may be the minimum of an expected duration of unavailability of the relay user equipment associated with the apparatus and an affordable delay for getting network access in addition to an expected direct network access delay and/or an indirect network access delay via another relay user equipment not associated with the apparatus.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AMF:: Access and Mobility Management Function
- API:: Application Programming Interface
- BFD:: Beam Failure Detection
- BS:: Base Station
- CU:: Centralized Unit
- DL:: Downlink
- DRX:: Discontinuons Reception
- DU:: Distributed Unit
- gNB:: gNodeB
- GSM:: Global System for Mobile communication
- HO:: Handover
- HSS:: Home Subscriber Server
- IoT:: Internet of Things
- L2:: Layer 2
- LTE:: Long Term Evolution
- MAC:: Medium Access Control
- MS:: Mobile Station
- MTC:: Machine Type Communication
- NEF:: Network Exposure Function
- NF:: Network Function
- NR:: New radio
- NRF:: Network Repository Function
- PDB:: Packet Delay Budget
- PDU:: Packet Data Unit
- RAM:: Random Access Memory
- (R)AN:: (Radio) Access Network
- RD:: Relay Discovery
- RLF:: Radio Link Failure
- ROM:: Read Only Memory
- RRC:: Radio Resource Control
- RSRP:: Reference Signal Received Power
- RSRQ:: Reference Signal Received Quality
- SL:: Sidelink
- SMF:: Session Management Function
- TR:: Technical Report
- TS:: Technical Specification
- UE:: User Equipment
- UMTS:: Universal Mobile Telecommunication System
- U2N:: User equipment to Network
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a user equipment;
Figure 4 shows a schematic representation of a remote user equipment, a relay user equipment and a gNodeB;
Figure 5 shows a schematic representation of a remote user equipment, a pre-associated relay user equipment and a gNodeB;
Figure 6 shows a flow diagram of a method for getting network access in a communication system;
Figure 7 shows a signalling diagram of a method for getting network access in a communication system;
Figure 8 shows a block diagram of the claimed method for getting network access in a communication system; and
Figure 9 shows a schematic representation of a non-volatile memory medium storing instructions which when executed by a processor allow a processor to perform one or more of the steps of the method of Figure 8.

### Detailed Description of the Figures

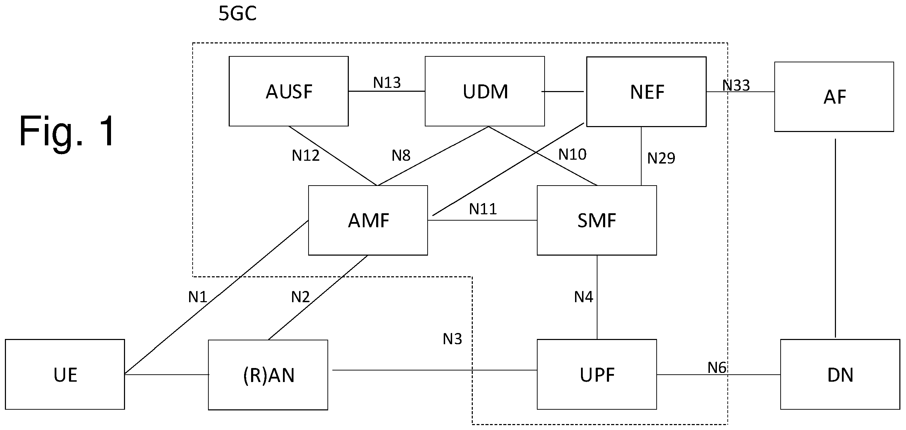

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) and/or a network exposure function (NEF).

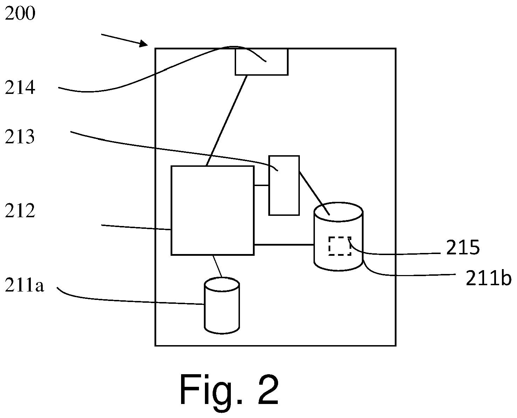

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

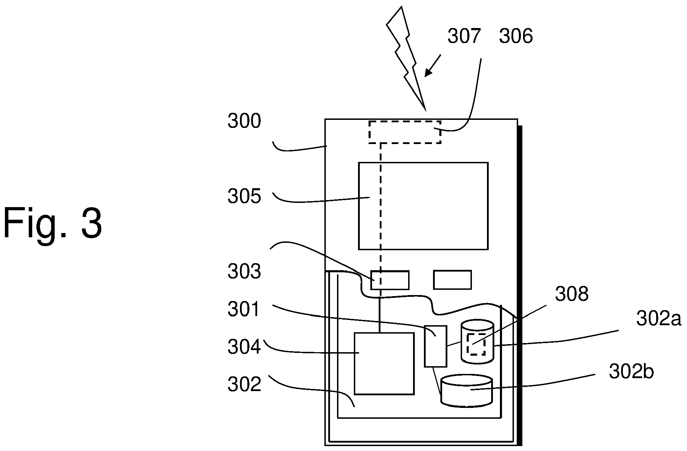

Figure 3 illustrates an example of a UE 300, such as the UE illustrated on Figure 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relate to sidelink (SL) based layer 2 (L2) UE to network (U2N) relay in Rel-17 and beyond.

One of key drivers for SL based L2 U2N relay is to provide energy-efficient network access for power sensitive remote UEs. Remote UEs may comprise wearable devices or Internet of thing sensor devices. Indirect SL based L2 U2N relay access may be preferred (i.e. given a higher priority) over direct Uu access (Uu denotes the air interface between a UE and a base station or gNB in cellular network) for remote UEs even when remote UEs are in a good network-coverage condition.

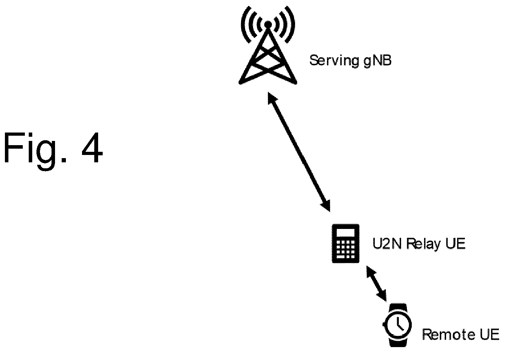

Figure 4 shows a schematic representation of a remote UE, a pre-associated relay UE and a gNodeB. The remote UE may be a smart watch. The pre-associated relay UE may be a smart phone.

In practice, there may be a pre-association between the remote UE and the pre-associated relay UE. For example, the remote UE and the pre-associated relay UE may belong to a same user/subscriber. The remote UE and the pre-associated relay UE may be co-located (e.g. may both be worn by same user/subscriber) and therefore may have a same mobility.

A SL connection may be maintained between the remote UE and the pre-associated relay UE regardless whether the remote UE uses the pre-associated relay UE L2 to get indirect network access. That is, a SL connection may be maintained between the remote UE and the pre-associated relay UE when the remote UE uses the pre-associated relay UE L2 to get indirect network access and may still be maintained between the remote UE and the pre-associated relay UE when the remote UE does not use the pre-associated relay UE L2 to get indirect network access.

Alternatively, a SL connection may be maintained between the remote UE and the pre-associated relay UE only when the remote UE uses the pre-associated relay UE L2 to get indirect network access and may not be maintained between the remote UE and the pre-associated relay UE when the remote UE does not use the pre-associated relay UE L2 to get indirect network access.

It has been agreed in 3GPP that a relay UE may need to fulfil a minimum Uu condition and/or maximum Uu condition. The minimum Uu condition may be a minimum downlink (DL) reference signal received power (RSRP) or reference signal received quality (RSRQ). The maximum Uu condition may be a maximum DL RSRP or RSRQ. A relay UE may be available as long as the DL RSRP or RSRQ is above the minimum DL RSRP or RSRQ and/or the DL RSRP or RSRQ is below the maximum DL RSRP or RSRQ.

If the DL RSRP or RSRQ at the relay UE is above the threshold the relay UE may be available. The relay UE may participate in relay discover (RD). For example, the relay UE may broadcast a RD announcement to remote UEs in proximity in case RD is based on a so-called model A, as specified in 3GPP TS 23.303 and TS 23.304 for examples. Alternatively, the relay UE may monitor RD solicitations from remote UEs in proximity and may respond to RD solicitation with a RD response in case RD is based on a so-called model B, as specified in 3GPP TS 23.303 and TS 23.304 for examples.

If the DL RSRP or RSRQ at the relay UE is below a threshold the relay UE may be unavailable. The relay UE may not participate in RD. For example, the relay UE may stop broadcasting RD announcements to remote UEs in proximity in case RD is based on a model A. Alternatively, the relay UE may stop monitoring RD solicitations from remote UEs in proximity or may stop responding to RD solicitations from remote UEs in proximity in case RD is based on a model B.

The relay UE may be unavailable when the relay UE experience bad Uu condition (as explained above), when the relay UE is handed over from a serving gNB to a target gNB, when the relay UE observes a beam failure by beam failure detection (BFD), when the relay UE declares radio link failure (RLF). That is, the relay UE may become unavailable from time to time depending on mobility and/or radio channel condition.

Let us consider a scenario in which a remote UE is pre-associated with a pre-associated relay UE.

The remote UE may be in radio resource control (RRC) idle state or inactive state. What if the remote UE has data to send and needs to get network access to a gNB via the pre-associated relay UE but the remote UE cannot discover the pre-associated relay UE because the pre-associated relay UE is unavailable? It may be noted that the sensing application of wearable or loT devices at the remote UE may need to report sensing results to a network server periodically as well as in response to an event being triggered.

A solution to the above technical problem may be that whenever the remote UE detects that the pre-associated relay UE is unavailable, the remote UE may either opt for attempting direct network access via Uu or for attempting indirect network access via another relay UE not pre-associated with the remote UE and in proximity to the remote UE.

Direct network access via Uu is not the preferable solution for the remote UE from power saving perspective. Indirect network access via another relay UE not pre-associated with the remote UE and in proximity to the remote UE may either not be allowed (e.g. due to subscription or configuration restriction) or not preferred (e.g. due to more frequent or extended RD monitoring by the remote UE in case of the model A or due to more frequent or extended RD solicitation transmission by the remote UE in case of the model B) and relay UE reselection resulting in more power consumption (not to mention security and charging aspects).

One or more aspects of this disclosure provide a solution to the above technical problem.

3GPP has agreed that the selection between direct network access via Uu and indirect network access via another relay UE not pre-associated with the remote UE is up to the implementation of the remote UE. Thus, whenever the remote UE may detect that the pre-associated Relay UE is unavailable, the remote UE may either opt for direct network access via Uu or indirect network access via another relay UE not pre-associated with the remote UE as explained above.

The remote UE may not necessarily be in RRC idle state or inactive state. The remote UE may be in RRC connected state (i.e. the remote may be served by the relay UE as opposed to waiting to be served by the relay UE). When the relay UE becomes unavailable, the relay UE may send an indication to the remote UE to trigger a preparation for a path switch (i.e. from an indirect path via the relay UE to a direct path via Uu) or a relay UE switch (i.e. reselection) at the remote UE.

L2 U2N relay feature is currently under standardization for Release-17 in 3GPP. It may be expected that one or more aspects of this disclosure will be related at least to TS 38.300 and TS 38.331 for Release-17 and beyond.

US20180152986A1 discloses a method in which a remote UE receives a disconnect message for disconnecting a link between a relay UE and the remote UE. The remote UE may disconnect the link on the basis of the disconnect message. The remote UE may not attempt to establish a link between the remote UE and the relay UE in a UE-specified time T. T is set by either the remote UE autonomously or by the network based on a cause value of the disconnect message (e.g. in case the cause value is "direct communication with remote UE is no longer allowed"). That is, indirect network access via the relay UE is excluded from the selectable options for the UE-specified time T while the remote UE can use any other selectable option for its need. The main motivation is to avoid ping-pong effects.

One or more aspects of this disclosure differ from US20180152986A1 in that a time period is provided during which the remote UE abstains from attempting direct network access via Uu or indirect network access via another relay UE not pre-associated with the remote UE but instead attempt indirect network access via the pre-associated relay UE (as opposed to a time period during which the remote UE abstains from attempting indirect network access via the pre-associated relay UE but instead attempt direct network access via Uu or indirect network access via another relay UE not pre-associated with the remote UE).

One or more aspects of this disclosure provide support for L2 U2N relay at a remote UE. The remote UE may be in RRC idle state or inactive state. The remote UE may need to get network access for sending data to a remote server. The remote UE may have a pre-association with a pre-associated relay UE. The pre-associated relay UE may be unavailable.

The remote UE may abstain from attempting direct access via Uu and indirect network access via another relay UE not pre-associated with the remote UE during a time period Tx. Instead, the remote UE may keep operating in a power saving mode with the pre-associated relay UE during the time period Tx. In the power saving mode the remote UE may use discontinuous reception (DRX) with the pre-associated relay UE. The remote UE may attempt indirect network via the pre-associated relay UE at least once during the time period Tx in case the pre-associated relay UE becomes available again within the time period Tx. That is, the remote UE may attempt to discover the pre-associated relay UE, select the pre-associated relay UE and establish an indirect connection to network via the pre-associated relay UE at least once during the time period Tx. This allows to maximize power saving at the remote UE.

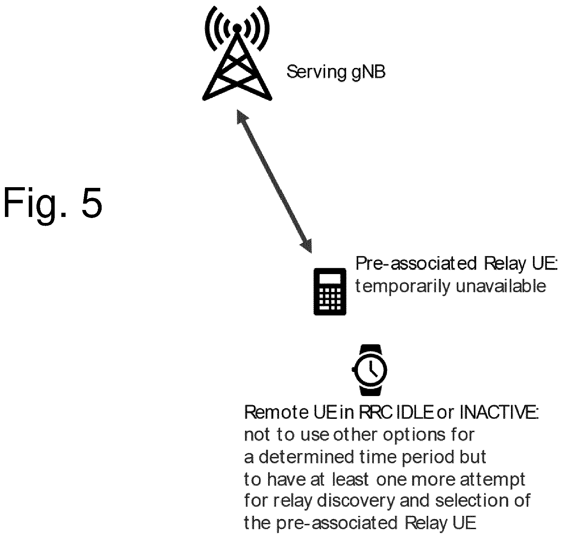

Figure 5 shows a schematic representation of a remote user equipment, a pre-associated relay user equipment and a gNodeB.

Initially, the remote UE may be in a RRC idle state or inactive state. The remote UE may need to get network access to send data to a remote server.

In step 1, the remote UE may detect that the pre-associated relay UE is unavailable.

The remote UE may detect that the pre-associated relay UE is unavailable by determining that a RD announcement has not been received from the pre-associated relay UE (e.g. for a predefined time interval) in case the RD model A is applied.

The remote UE may detect that the pre-associated relay UE is unavailable by sending a RD solicitation to the pre-associated relay UE and determining that a RD response to the RD solicitation has not been received from the pre-associated relay UE (e.g. for a predefined time interval) in case the RD model B is applied.

In step 2, the remote UE may determine an expected duration Tu of unavailability of the pre-associated relay UE.

The remote UE may determine a likelihood that the pre-associated relay UE will become available again and may estimate the time it may stay unavailable. In other words, the remote UE may evaluate the temporariness of the unavailability of the relay UE.

The remote UE may determine the expected duration Tu of unavailability of the pre-associated relay UE based on the nature of the pre-association between the remote UE and the relay UE. At least two types of pre-association may be considered.

A first type of pre-association may be a preconfigured permanent or semi-permanent association (e.g. assignment) in which the remote UE is pre-associated (e.g. preassigned) to the relay UE of a same user/subscriber. The remote UE may be restricted to attempt indirect network access via the pre-associated relay UE or direct access via Uu.

A second type of pre-association may be based on operation history of the remote UE. The operation history of the remote UE may comprise a relay UE selection history with the pre-associated relay UE or whether there is a SL connection maintained between the remote UE and the pre-associated relay UE. For examples, the remote UE may consider a particular relay UE as the pre-associated relay UE if the remote UE has been able to use this particular relay UE for at least the last N seconds, if the number of relay UE reselection triggered whilst getting indirect network access via the particular relay UE is less than a threshold in a pre-defined duration and/or if there is a SL connection maintained between the remote UE and this particular relay UE.

The remote UE may determine the expected duration Tu of unavailability of the pre-associated relay UE based on the Uu condition (e.g. DL RSRP or RSRQ). A DL RSRP or RSRQ measured at the remote UE may be used to evaluate the Uu condition. Indeed, the remote UE and the pre-associated relay UE are expected to be co-located or moving together and therefore experiencing similar Uu condition. For example, a smart watch device and a pre-associated smart phone are both carried by a same user/subscriber and therefore experience the same mobility and Uu condition. Thus, the remote UE may be able to determine whether and/or why the relay UE is unavailable based on its own radio measurement.

The remote UE may determine the expected duration Tu of unavailability of the pre-associated relay UE based on DL RSRP or RSRQ measured at the remote UE as follows.

If DL RSRP or RSRQ is greater than or equal to an upper threshold, then the expected duration Tu of unavailability of the pre-associated relay UE may be set to Tu1. Tu1 may be greater than or equal to a maximum delay time until a next UL access (e.g. physical random access channel) occasion is available.

If the upper threshold is greater than DL RSRP or RSRQ and DL RSRP or RSRQ is greater than or equal to a lower threshold, then the expected duration Tu of unavailability of the pre-associated relay UE may be set to Tu2. Tu2 may be greater than or equal to Tu1.

If DL RSRP or RSRQ is lower than the lower threshold, then the expected duration Tu of unavailability of the pre-associated relay UE may be set to Tu3. Tu3 may be greater than or equal to Tu2.

The remote UE may determine the expected duration Tu of unavailability of the pre-associated relay UE based on variations of DL RSRP or RSRQ measured at the remote UE and/or mobility of the remote UE and the pre-associated relay UE. The remote UE may adjust the expected duration Tu of unavailability of the pre-associated relay UE on the fly.

For example, if the remote UE and the pre-associated relay UE are stationary and DL RSRP or RSRQ remain above the maximum DL RSRP or RSRQ or below the minimum DL RSRP or RSRQ for at least a given time interval (low variation in case of low mobility), the expected duration Tu of unavailability of the pre-associated relay UE may be increased.

The remote UE may determine the expected duration Tu of unavailability of the pre-associated relay UE based on SL condition in case a SL connection is maintained between the remote UE and the pre-associated relay UE.

Different expected duration Tu of unavailability of the pre-associated relay UE may be used depending on whether a SL connection is maintained between the remote UE and the pre-associated relay UE and/or SL condition on this SL connection as measured at the remote UE or obtained from the pre-associated relay UE by the remote UE.

In a case where a SL connection is maintained between the remote UE and the pre-associated relay UE and the remote UE attempts indirect network access via the pre-associated relay UE, at least the delays due to the pre-associated relay UE discovery and selection as well as the SL connection establishment can be avoided. Thus, in this case the expected duration Tu of unavailability of the pre-associated relay UE may be shorter as compared to another case where there is no SL connection maintained between the remote UE and the pre-associated relay UE.

SL condition, such as SL RSRP or RSRQ, may be used to refine expected duration Tu of unavailability of the pre-associated relay UE, similar to the use of DL RSRP or DL RSRQ. The better the SL condition, the lower the latency for SL communications between the remote UE and the pre-associated relay UE and the shorter the expected duration Tu of unavailability of the pre-associated relay UE. The worse the SL condition, the greater the latency for SL communications between the remote UE and the pre-associated relay UE and the longer the expected duration Tu of unavailability of the pre-associated relay UE.

The remote UE may determine the expected duration Tu of unavailability of the pre-associated relay UE based on an indication of unavailability from the pre-associated relay UE. The pre-associated relay UE may send an indication of unavailability to the remote UE over a SL connection maintained between the remote UE and the pre-associated UE when the pre-associated relay UE is unavailable or is about to become unavailable. The indication of unavailability may specify the cause and/or expected time for unavailability of the pre-associated relay UE.

Alternatively, the pre-associated relay UE may not send an indication of unavailability to the remote UE over a SL connection maintained between the remote UE and the pre-associated UE when the pre-associated relay UE is unavailable or is about to become unavailable. The indication of unavailability may result from an absence of an expected response from the pre-associated relay UE upon a transmission from the remote UE.

The remote UE may determine the expected duration Tu of unavailability of the pre-associated relay UE based on exceptional or default setting. The exceptional setting may be for exceptional circumstances. The default setting may be when none of the above circumstances or the exceptional circumstances apply. The expected duration Tu of unavailability of the pre-associated relay UE may be set to an exceptional or default value.

A first threshold Th1 may be introduced for the expected duration Tu of unavailability of the pre-associated relay UE above which the pre-associated relay UE may no longer be considered as temporarily unavailable (the pre-associated relay UE may be considered as unavailable in the long term rather than in the short term). This first threshold Th1 may be used in steps 4a and 4b below.

In step 3, the remote UE may determine an affordable delay Ta for getting network access. The remote UE may determine an expected direct network access delay via Uu and/or an indirect network access delay via another relay UE not pre-associated with the remote UE.

The remote UE may determine the affordable delay Ta for getting network access based on a quality of service (QoS) class, a packet delay budget (PDB) of the data to be sent by the remote UE, a Uu condition, a SL condition and/or a RRC idle or inactive state of the remote UE.

For example, a regular periodical reporting of sensing-application data in normal operational situation from a remote UE may tolerate flexible affordable delay Ta for getting network access whereas an event-triggered reporting of sensing-application data due to abnormal operational situation may be time sensitive and therefore may tolerate less flexible affordable delay Ta for getting network access.

In an implementation, the remote UE may determine the affordable delay Ta for getting network access based on a QoS class. If the QoS class is considered as best-effort, the affordable delay Ta for getting network access may be set to Ta1.

If the QoS class is considered as moderate time-sensitive interactive, the affordable delay Ta for getting network access may be set to Ta2. Ta2 may be lower than or equal to Ta1. If the QoS class is considered as strong time-sensitive, the affordable delay Ta for getting network access may be set Ta3. Ta3 may greater than or equal to zero. Ta3 may be lower than or equal to Ta2.

In another implementation, the remote UE may determine the affordable delay Ta for getting network access based on a RRC idle or inactive state of the remote UE. The affordable delay Ta for getting network access may be greater when the remote UE is in RRC idle state than in RRC inactive state.

In another implementation, the remote UE may determine the affordable delay Ta for getting network access based on whether a SL connection is maintained between the remote UE and the pre-associated relay UE. The affordable delay Ta for getting network access may be greater when a SL connection is maintained between the remote UE and the pre-associated relay UE than when no SL connection is maintained between the remote UE and the pre-associated relay UE.

In another implementation, the remote UE may determine the affordable delay Ta for getting network access based on a Uu condition or a SL condition. The Uu condition or the SL condition may comprise available resources or channel load states over Uu or SL. The Uu condition or the SL condition may be measured by the remote UE.

The affordable delay Ta for getting network access may need to be above a second threshold Th2 to be long enough to allow the remote UE to attempt at least one indirect network access via the pre-associated relay UE during a time period Tx and then, if necessary, attempt a direct network access via Uu and/or an indirect network access via another non-pre-associated relay UE after the time period Tx. This second threshold Th2 may be used in steps 4a and 4b below.

In step 4a, if the expected duration Tu of unavailability of the relay UE is below the first threshold Th1 and the affordable delay Ta for getting network access is above the second threshold Th2, the remote UE may abstain from attempting direct access via Uu and indirect network access via another relay UE not pre-associated with the remote UE during the time period Tx. Instead, the remote UE may keep operating in a power saving mode associated with the pre-associated relay UE during the time period Tx. The remote UE may attempt indirect network via the pre-associated relay UE at least once during the time period Tx in case the pre-associated Relay UE becomes available again within the time period Tx. The time period Tx may be derived from the expected duration Tu of unavailability of the relay UE and the affordable delay Ta for getting network access.

In step 4b, if the expected duration Tu of unavailability of the relay UE is above the first threshold Th1 or the affordable delay Ta for getting network access is below the second threshold Th2, the remote UE may abstain from attempting indirect network via the pre-associated relay UE. Instead, the remote UE may attempt direct access via Uu or indirect network access via another relay UE not pre-associated with the remote UE.

In the power saving mode the remote UE may use SL DRX between the remote UE and the pre-associated relay UE.

The time period Tx may be based on the expected duration Tu of unavailability of the relay UE, the affordable delay Ta for getting network access, Uu condition, SL condition and/or amount of data to be sent. The Uu condition or SL condition may comprise available resources or channel load states over Uu or SL.

In an implementation, the time period Tx may be based on the expected duration Tu of unavailability of the relay UE and the affordable delay Ta for getting network access. The time period Tx may be the smallest (i.e. minimum) of the expected duration Tu of unavailability of the relay UE and/or the affordable delay Ta for getting network access.

In another implementation, the time period Tx may be based on the amount of data to be sent. The greater the amount of data to be sent, the longer the time period Tx. Indeed, a greater the amount of data to be sent may justify a longer time period Tx as the power saving for the remote UE if the pre-associated Relay UE becomes available during the time period Tx is of greater significance.

The remote UE may implement a timer set to the time period Tx. The remote UE may trigger the timer in response to detecting that the pre-associated relay UE is unavailable. If during the time period Tx the remote UE discovers the relay UE, the remote UE may select the pre-associated relay UE and establish an indirect network connection via the pre-associated relay UE. The remote UE may get network access and may stop the timer.

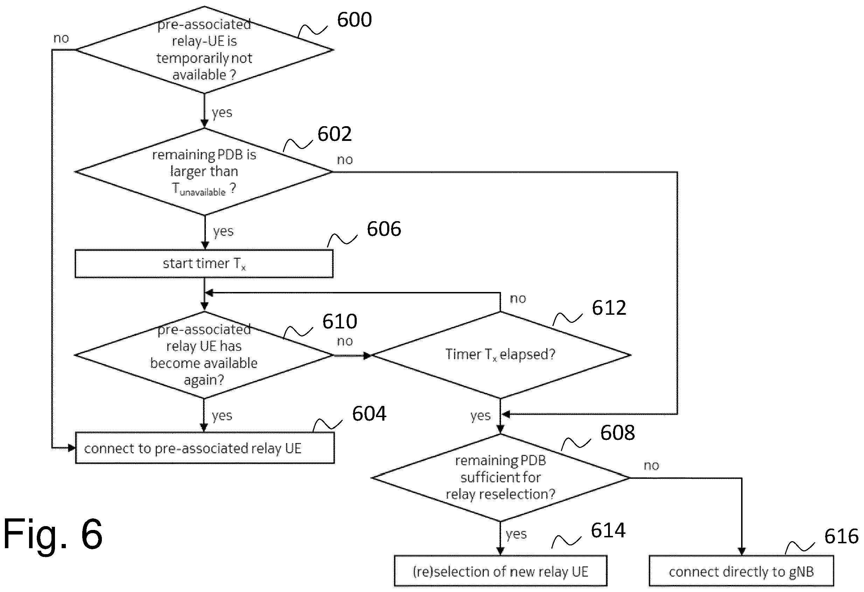

Figure 6 shows a flow diagram of a method for getting network access in a communication system.

In step 600 a remote UE may determine whether a pre-associated relay UE is unavailable. If the remote UE may determine that the pre-associated relay UE is unavailable the method may go to step 602. If the remote UE may determine that the pre-associated relay UE is not unavailable the method may go to step 604.

In step 602 the remote UE may determine whether a remaining PDB is larger than an expected duration Tu (here Tunavailble) of unavailability of the relay UE. If the remote UE may determine that the remaining PDB is larger than the expected duration Tu of unavailability of the relay UE the method may go to step 606. If the remote UE may determine that the remaining PDB is not larger than the expected duration Tu of unavailability of the relay UE the method may go to step 608.

In step 606 the remote UE may set a timer to a time period Tx. The remote UE may start the timer. The method may go to step 610.

In step 610 the remote UE may determine whether the pre-associated relay UE has become available again during the time period Tx. If the remote UE may determine that the pre-associated relay UE has become available again during the time period Tx the method may go to step 604. If the remote UE may determine that the pre-associated relay UE has not become available again during the time period Tx the method may go to step 612.

In step 604 the remote UE may attempt indirect network access to a gNB via the pre-associated relay UE. The remote UE may attempt to discover the pre-associated relay UE, select the pre-associated relay UE and establish an indirect network connection via the pre-associated relay UE. The remote UE may get indirect network access to a gNB via the pre-associated relay UE.

In step 612 the remote UE may determine whether the timer has elapsed. If the remote UE may determine that the timer has elapsed the method may go to step 608. If the remote UE may determine that the timer has not elapsed the method may go to step 610.

In step 608 the remote UE may determine whether the remaining PDB is sufficient for relay UE (re)selection. If the remote UE may determine that the remaining PDB is long enough for relay UE (re)selection the method may go to step 614. If the remote UE may determine that the remaining PDB is not long enough for relay UE (re)selection the method may go to step 616.

In step 614 the remote UE may attempt indirect network access to the gNB via another relay UE not pre-associated with the remote UE. The remote UE may attempt to discover the other relay UE, select the other relay UE and establish an indirect network connection via the other relay UE. The remote UE may get indirect network access to the gNB via the other relay UE.

In step 616 the remote UE may attempt direct network access to the gNB via Uu. The remote UE may attempt to establish a direct connection to the gNB via Uu. The remote UE may get direct network access to the gNB via Uu.

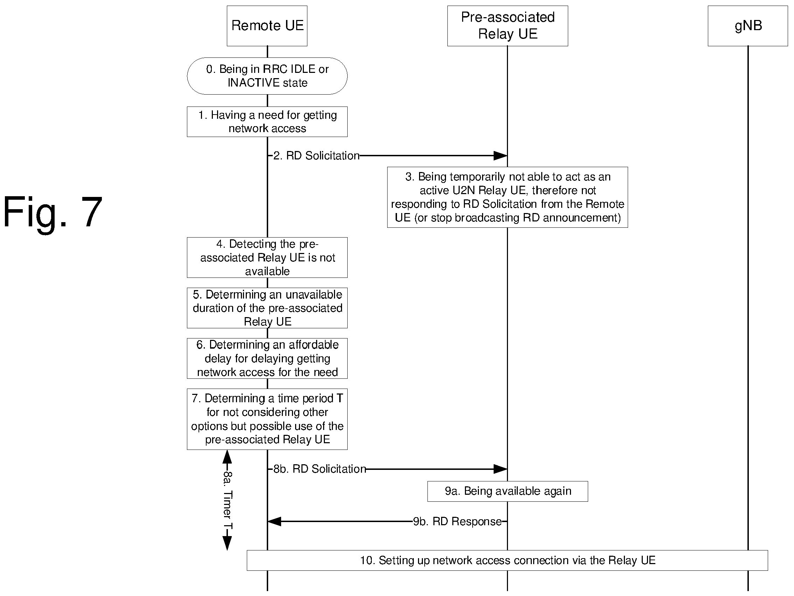

Figure 7 shows a signalling diagram of a method for getting network access in a communication system.

In step 0 a remote UE may be in RRC idle state or RRC inactive state.

In step 1 the remote UE may determine that the remote UE has a need for getting network access.

In step 2 the remote UE may send a RD solicitation to a pre-associated relay UE.

In step 3 the pre-associated relay UE may not respond to the RD solicitation from the remote UE. Alternatively, the pre-associated relay UE may stop broadcasting RD announcement.

In step 4 the remote UE may determine that the pre-associated relay UE is unavailable.

In step 5 the remote UE may determine an expected duration Tu of unavailability of the relay UE.

In step 6 the remote UE may determine an affordable delay Ta for getting network access.

In step 7 the remote UE may determine a time period Tx for abstaining from attempting any direct network access and/or any indirect network access via another non-pre-associated relay UE and for attempting at least one indirect network access via the pre-associated relay UE.

In step 8a the remote UE may set a timer to the time period Tx. The remote UE may start the timer.

Before the timer elapses, the remote UE may attempt indirect network access to a gNB via the pre-associated relay UE. The remote UE may attempt to discover the pre-associated relay UE, select the pre-associated relay UE and establish an indirect network connection via the pre-associated relay UE

In step 8b, the remote UE may send a RD solicitation to the pre-associated relay UE.

In step 9a, the pre-associated relay UE may become available again.

In step 9b the pre-associated relay UE may send a RD response to the remote UE. In step 10 the remote UE may select the pre-associated relay UE and establish an indirect network connection via the pre-associated relay UE. The remote UE may get indirect network access to a gNB via the pre-associated relay UE.

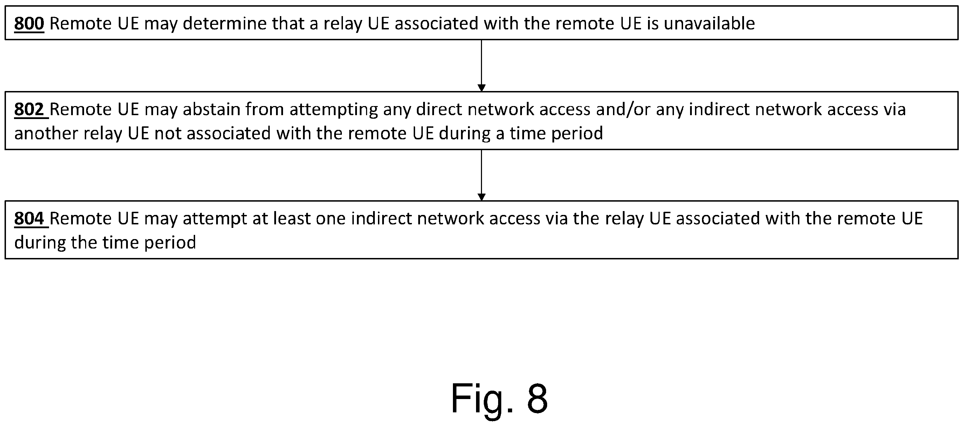

Figure 8 shows a block diagram of the claimed method for getting network access in a communication system.

In step 800 a remote UE may determine that a relay UE associated with the remote UE is unavailable.

In step 802 the remote UE may abstain from attempting any direct network access and/or any indirect network access via another relay UE not associated with the remote UE during a time period.

In step 804 the remote UE may attempt at least one indirect network access via the relay UE associated with the remote UE during the time period.

Attempting direct network access may comprise attempting to establish a direct connection (i.e. downlink and/or uplink connection) with the network.

Attempting indirect network access via another relay UE not associated with the remote UE may comprise attempting to discover the other relay UE not associated with the remote UE, select the other relay UE not associated with the remote UE and/or establish an indirect connection (i.e. sidelink connection) with the network via the other relay UE not associated with the remote UE.

Attempting indirect network access via the relay UE associated with the remote UE may comprise attempting to discover the relay UE associated with the remote UE, select the relay UE associated with the remote UE and/or establish an indirect connection (i.e. downlink and/or uplink connection) with the network via the relay UE associated with the remote UE.

In response to determining that an expected duration of unavailability of the relay UE associated with the remote UE is lower than a first threshold and an affordable delay for getting network access is greater than a second threshold, the remote UE may abstain from attempting any direct network access and/or any indirect network access via the other relay UE not associated with the remote UE during the time period. The remote UE may attempt at least one indirect network access via the relay UE associated with the remote UE during the time period.

The affordable delay for getting network access comprises an affordable delay for getting indirect network access via the relay UE associated with the remote UE, direct network access or indirect network access via the other relay user equipment not associated with the remote UE.

The remote UE may fail to get indirect network access via the relay UE associated with the remote UE during the time period. The remote UE may attempt the direct network access and/or the indirect network access via the other relay UE not associated with the remote UE after the time period.

In response to determining that the expected duration of unavailability of the relay UE associated with the remote UE is greater than the first threshold or the affordable delay for getting network access is lower than the second threshold, the remote UE may attempt a direct network access and/or an indirect network access via another relay UE not associated with the remote UE during the time period. The remote UE may abstain from attempting at least one indirect network access via the relay UE associated with the remote UE during the time period.

Below the first threshold, the expected duration of unavailability of the relay UE associated with the remote UE may indicate that the relay UE associated with the remote UE is temporarily unavailable (unavailable for a short time period).

Above the first threshold, the expected duration of unavailability of the relay UE associated with the remote UE may indicate that the relay UE associated with the remote UE is not temporarily unavailable (unavailable for a long time period).

Below the second threshold, the affordable delay for getting network access may be too short to attempt at least one indirect network access via the relay UE associated with the remote UE during the time period and then, if necessary, attempt a direct network access and/or an indirect network access via the other relay UE not associated with the remote UE after the time period.

Above the second threshold, the affordable delay for getting network access may be long enough to attempt at least one indirect network access via the relay UE associated with the remote UE during the time period and then, if necessary, attempt a direct network access and/or an indirect network access via the other relay UE not associated with the remote UE after the time period.

Determining that the relay UE associated with the remote UE is unavailable may comprise: determining that a RD announcement from the relay UE associated with the remote UE has not been received.

Determining that the relay UE associated with the remote UE is unavailable may comprise: determining that a RD announcement from the relay UE associated with the remote UE has been received; sending a RD solicitation to the relay UE associated with the remote UE; and receiving a response to the RD solicitation indicating that the relay UE associated with the remote UE is unavailable or determining that a response to the RD solicitation has not been received.

Determining that the relay UE associated with the remote UE is unavailable may comprise: broadcasting a RD solicitation to a plurality of relay UE; receiving a response to the RD solicitation indicating that the relay UE associated with the remote UE is unavailable or determining that a response to the RD solicitation has not been received from the relay UE associated with the remote UE.

Determining that the relay UE associated with the remote UE is unavailable may comprise: receiving an indication of unavailability from the relay UE associated with the remote UE over a sidelink maintained between the remote UE and the relay UE associated with the remote UE. The indication of unavailability may comprise a cause of unavailability and/or an expected duration of unavailability of the relay UE associated with the remote UE.

The time period may be based on at least one of: an expected duration of unavailability of the relay UE associated with the remote UE; an affordable delay for getting network access; downlink conditions between the network and the remote UE; sidelink conditions between the relay UE associated with the remote UE and the remote UE; and an amount of data to be sent by the remote UE.

The expected duration of unavailability of the relay UE associated with the remote UE may be based on at least one of: a nature of the association between the remote UE and the relay UE associated with the remote UE; downlink conditions between the network and the remote UE; sidelink conditions between the relay UE associated with the remote UE and the remote UE; an indication of unavailability received from the relay UE associated with the remote UE; and a default duration of unavailability of the relay UE associated with the remote UE.

The nature of the association between the remote UE and the relay UE associated with the remote UE may comprise whether a permanent or semi-permanent association is configured.

The nature of the association between the remote UE and the relay UE associated with the remote UE may comprise an operation history between the remote UE and the relay UE associated with the remote UE.

The operation history may comprise at least one of: history of selecting the relay UE associated with the remote UE for indirect network access via the relay UE associated with the remote UE, history of maintaining a sidelink connection with the relay UE associated with the remote UE, history of using the relay UE associated with the remote UE for indirect network access via the relay UE associated with the remote UE for a time period, history of a number of relay UE reselection being triggered whilst using the relay UE associated with the remote UE for indirect network access via the relay UE associated with the remote UE.

The sidelink conditions between the remote UE and the relay UE associated with the remote UE may comprise at least one of: whether a sidelink is maintained between the remote UE and the relay UE associated with the remote UE and sidelink conditions between the remote UE s and the relay UE associated with the remote UE measured by the remote UE or the relay UE associated with the remote UE.

The indication of unavailability received from the relay UE associated with the remote UE may comprise at least one of a cause and duration of unavailability.

Determining the expected duration of unavailability of the relay UE associated with the remote UE may comprise: determining that the expected duration of unavailability of the relay UE associated with the remote UE is equal to a duration T1 if the downlink conditions between the network and the remote UE are greater than an upper threshold; determining that the expected duration of unavailability of the relay UE associated with the remote UE is equal to a duration T2 if the downlink conditions between the network and the remote UE are lower than the upper threshold and greater than or equal to a lower threshold, where the duration T2 is greater than the duration T1; and determining that the expected duration of unavailability of the relay UE associated with the remote UE is equal to a duration T3 if the downlink conditions between the network and the remote UE are lower than the lower threshold, where the duration T3 is greater than the duration T2.

Determining the expected duration of unavailability of the relay UE associated with the remote UE may comprise: determining the expected duration of unavailability of the relay UE associated with the remote UE based on variations of the downlink conditions between the network and the remote UE and mobility of the remote UE and the relay UE associated with the remote UE.

The affordable delay for getting network access may be based on at least one of: a quality of service class; packet delay budget of data to be sent by the remote UE; downlink conditions between the network and the remote UE; sidelink conditions between the relay UE associated with the remote UE and the remote UE; and a state of the remote UE.

Determining the affordable delay for getting network access may comprise: determining that the affordable delay for getting network access is equal to a duration t1 if a quality of service class is best effort; determining that the affordable delay for getting network access is equal to a duration t2 if the quality of service class is moderate time sensitive, wherein t2 is lower than or equal to t1; and determining that the affordable delay for getting network access is equal to a duration t3 if the quality of service class is strong time sensitive, wherein t3 is greater than or equal to zero and is lower than or equal to t2.

The affordable delay for getting network access may be greater when the remote UE is in idle state than when the remote UE is in inactive state.

The affordable delay for getting network access may be greater when a sidelink is maintained between the remote UE and the relay UE associated with the remote UE.

The time period may be the minimum of an expected duration of unavailability of the relay UE associated with the remote UE and an affordable delay for getting network access in addition to an expected direct network access delay and/or an indirect network access delay via another relay UE not associated with the remote UE.

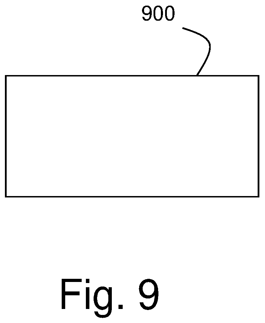

Figure 9 shows a schematic representation of non-volatile memory media 900 storing instructions and/or parameters which when executed by a processor allow the processor to perform one or more of the steps of the method of Figure 8.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 8, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
means for determining (800) that a relay user equipment associated with the apparatus is unavailable;
means for abstaining (802) from attempting any direct network access and/or any indirect network access via another relay user equipment not associated with the apparatus during a time period; and
means for attempting (804) at least one indirect network access via the relay user equipment associated with the apparatus during the time period.

2. The apparatus of claim 1, comprising:
in response to determining that an expected duration of unavailability of the relay user equipment associated with the apparatus is lower than a first threshold and an affordable delay for getting network access is greater than a second threshold,
means for abstaining from attempting any direct network access and/or any indirect network access via the other relay user equipment not associated with the apparatus during the time period; and
means for attempting at least one indirect network access via the relay user equipment associated with the apparatus during the time period.

3. The apparatus of claim 2, comprising:
means for attempting the direct network access and/or the indirect network access via the other relay user equipment not associated with the apparatus after the time period, in response to failing to get indirect network access via the relay user equipment associated with the apparatus during the time period.

4. The apparatus of claim 2 or claim 3, comprising:
in response to determining that the expected duration of unavailability of the relay user equipment associated with the apparatus is greater than the first threshold or the affordable delay for getting network access is lower than the second threshold,
means for attempting a direct network access and/or an indirect network access via another relay user equipment not associated with the apparatus during the time period; and
means for abstaining from attempting at least one indirect network access via the relay user equipment associated with the apparatus during the time period.

5. The apparatus of any of claims 1 to 4, wherein determining that the relay user equipment associated with the apparatus is unavailable comprises:
determining that a relay discovery announcement from the relay user equipment associated with the apparatus has not been received.

6. The apparatus of any of claims 1 to 5, wherein determining that the relay user equipment associated with the apparatus is unavailable comprises:
determining that a relay discovery announcement from the relay user equipment associated with the apparatus has been received;
sending a relay discovery solicitation to the relay user equipment associated with the apparatus; and
receiving a response to the relay discovery solicitation indicating that the relay user equipment associated with the apparatus is unavailable or determining that a response to the relay discovery solicitation has not been received.

7. The apparatus of any of claims 1 to 6, wherein the time period is based on at least one of:
an expected duration of unavailability of the relay user equipment associated with the apparatus;
an affordable delay for getting network access;
downlink conditions between the network and the apparatus;
sidelink conditions between the relay user equipment associated with the apparatus and the apparatus; and
an amount of data to be sent by the apparatus.

8. The apparatus of any of claims 1 to 7, wherein the expected duration of unavailability of the relay user equipment associated with the apparatus is based on at least one of:
whether the association between the apparatus and the relay user equipment associated with the apparatus is a permanent or semi-permanent association;
an operation history between the apparatus and the relay user equipment associated with the apparatus;
downlink conditions between the network and the apparatus;
sidelink conditions between the relay user equipment associated with the apparatus and the apparatus;
an indication of unavailability received from the relay user equipment associated with the apparatus; and
a default duration of unavailability of the relay user equipment associated with the apparatus.

9. The apparatus of any of claims 2 to 8, wherein determining the expected duration of unavailability of the relay user equipment associated with the apparatus comprises:
determining that the expected duration of unavailability of the relay user equipment associated with the apparatus is equal to a duration T1 if the downlink conditions between the network and the apparatus are greater than an upper threshold;
determining that the expected duration of unavailability of the relay user equipment associated with the apparatus is equal to a duration T2 if the downlink conditions between the network and the apparatus are lower than the upper threshold and greater than or equal to a lower threshold, where the duration T2 is greater than the duration T1; and
determining that the expected duration of unavailability of the relay user equipment associated with the apparatus is equal to a duration T3 if the downlink conditions between the network and the apparatus are lower than the lower threshold, where the duration T3 is greater than the duration T2.

10. The apparatus of any of claims 2 to 8, wherein determining the expected duration of unavailability of the relay user equipment associated with the apparatus comprises:
determining the expected duration of unavailability of the relay user equipment associated with the apparatus based on variations of the downlink conditions between the network and the apparatus and mobility of the apparatus and the relay user equipment associated with the apparatus.

11. The apparatus of any of claims 2 to 10, wherein the affordable delay for getting network access is based on at least one of:
a quality of service class;
packet delay budget of data to be sent by the apparatus;
downlink conditions between the network and the apparatus;
sidelink conditions between the relay user equipment associated with the apparatus and the apparatus; and
a state of the apparatus.

12. The apparatus of claim 11, wherein determining the affordable delay for getting network access comprises:
determining that the affordable delay for getting network access is equal to a duration t1 if a quality of service class is best effort;
determining that the affordable delay for getting network access is equal to a duration t2 if the quality of service class is moderate time sensitive, wherein t2 is lower than or equal to t1; and
determining that the affordable delay for getting network access is equal to a duration t3 if the quality of service class is strong time sensitive, wherein t3 is greater than or equal to zero and is lower than or equal to t2.

13. The apparatus of any of claims 1 to 14, wherein the time period is the minimum of an expected duration of unavailability of the relay user equipment associated with the apparatus and an affordable delay for getting network access in addition to an expected direct network access delay and/or an indirect network access delay via another relay user equipment not associated with the apparatus.

14. A method comprising:
determining (800) that a relay user equipment associated with the apparatus is unavailable;
abstaining (802) from attempting any direct network access and/or any indirect network access via another relay user equipment not associated with the apparatus during a time period; and
attempting (804) at least one indirect network access via the relay user equipment associated with the apparatus during the time period.

15. A computer program comprising computer executable instructions which when run on one or more processors perform the steps of the method of claim 14.

## Patentansprüche

1. Vorrichtung, die Folgendes umfasst:
Mittel zum Bestimmen (800), dass eine mit der Vorrichtung verknüpfte Weiterleitungsteilnehmereinrichtung nicht verfügbar ist;
Mittel zum Unterlassen (802) des Versuchens eines direkten Netzwerkzugangs und/oder eines indirekten Netzwerkzugangs während einer Zeitperiode via eine andere nicht mit der Vorrichtung verknüpfte Weiterleitungsteilnehmereinrichtung; und
Mittel zum Versuchen (804) von mindestens einem indirekten Netzwerkzugang während der Zeitperiode via die mit der Vorrichtung verknüpfte Weiterleitungsteilnehmereinrichtung ist.

2. Vorrichtung nach Anspruch 1, die Folgendes umfasst:
in Reaktion auf das Bestimmen, dass eine erwartete Dauer einer Nichtverfügbarkeit der mit der Vorrichtung verknüpften Weiterleitungsteilnehmereinrichtung kürzer ist als ein erster Schwellwert und eine erschwingliche Verzögerung zum Erlangen eines Netzwerkzugangs länger ist als ein zweiter Schwellwert,
Mittel zum Unterlassen des Versuchens eines direkten Netzwerkzugangs und/oder eines indirekten Netzwerkzugangs während der Zeitperiode via die andere nicht mit der Vorrichtung verknüpft Weiterleitungsteilnehmereinrichtung; und
Mittel zum Versuchen von mindestens einem indirekten Netzwerkzugang während der Zeitperiode via die mit der Vorrichtung verknüpfte Weiterleitungsteilnehmereinrichtung.

3. Vorrichtung nach Anspruch 2, die Folgendes umfasst:
Mittel zum Versuchen des direkten Netzwerkzugangs und/oder des indirekten Netzwerkzugangs nach der Zeitperiode via die andere mit der Vorrichtung verknüpfte Weiterleitungsteilnehmereinrichtung in Reaktion auf das Fehlschlagen des Erlangens eines indirekten Netzwerkzugangs während der Zeitperiode via die mit der Vorrichtung verknüpfte Weiterleitungsteilnehmereinrichtung.

4. Vorrichtung nach Anspruch 2 oder Anspruch 3, die Folgendes umfasst:
in Reaktion auf das Bestimmen, dass die erwartete Dauer einer Nichtverfügbarkeit der mit der Vorrichtung verknüpften Weiterleitungsteilnehmereinrichtung länger ist als der erste Schwellwert oder die erschwingliche Verzögerung zum Erlangen eines Netzwerkzugangs kürzer ist als der zweite Schwellwert,
Mittel zum Versuchen eines direkten Netzwerkzugangs und/oder eines indirekten Netzwerkzugangs während der Zeitperiode via eine andere nicht mit der Vorrichtung verknüpfte Weiterleitungsteilnehmereinrichtung; und
Mittel zum Unterlassen des Versuchens von mindestens einem indirekten Netzwerkzugang während der Zeitperiode via die mit der Vorrichtung verknüpfte Weiterleitungsteilnehmereinrichtung.

5. Vorrichtung nach einem der Ansprüche 1 bis 4, wobei das Bestimmen, dass die mit der Vorrichtung verknüpfte Weiterleitungsteilnehmereinrichtung nicht verfügbar ist, Folgendes umfasst:
Bestimmen, dass eine Weiterleitungsentdeckungsankündigung von der mit der Vorrichtung verknüpften Weiterleitungsteilnehmereinrichtung nicht empfangen wurde.

6. Vorrichtung nach einem der Ansprüche 1 bis 5, wobei das Bestimmen, dass die mit der Vorrichtung verknüpfte Weiterleitungsteilnehmereinrichtung nicht verfügbar ist, Folgendes umfasst:
Bestimmen, dass eine Weiterleitungsentdeckungsankündigung von der mit der Vorrichtung verknüpften Weiterleitungsteilnehmereinrichtung empfangen wurde;
Senden einer Weiterleitungsentdeckungsanforderung an die mit der Vorrichtung verknüpfte Weiterleitungsteilnehmereinrichtung; und
Empfangen einer Antwort auf die Weiterleitungsentdeckungsanforderung, die anzeigt, dass die mit der Vorrichtung verknüpfte Weiterleitungsteilnehmereinrichtung nicht verfügbar ist, oder Bestimmen, dass eine Antwort auf die Weiterleitungsentdeckungsanforderung nicht empfangen wurde.

7. Vorrichtung nach einem der Ansprüche 1 bis 6, wobei die Zeitperiode auf mindestens einem von Folgendem basiert:
einer erwarteten Dauer der Nichtverfügbarkeit der mit der Vorrichtung verknüpften Weiterleitungsteilnehmereinrichtung;
einer erschwinglichen Verzögerung des Erlangens eines Netzwerkzugangs;
Downlinkbedingungen zwischen dem Netzwerk und der Vorrichtung;
Sidelinkbedingungen zwischen der mit der Vorrichtung verknüpften Weiterleitungsteilnehmereinrichtung und der Vorrichtung; und
einer Menge von Daten, die von der Vorrichtung zu senden sind.

8. Vorrichtung nach einem der Ansprüche 1 bis 7, wobei die erwartete Dauer der Nichtverfügbarkeit der mit der Vorrichtung verknüpften Weiterleitungsteilnehmereinrichtung auf mindestens einem von Folgendem basiert:
ob die Verknüpfung zwischen der Vorrichtung und der mit der Vorrichtung verknüpften Weiterleitungsteilnehmereinrichtung eine permanente oder eine semipermanente Verknüpfung ist;
einem Betriebsverlauf zwischen der Vorrichtung und der mit der Vorrichtung verknüpften Weiterleitungsteilnehmereinrichtung;
Downlinkbedingungen zwischen dem Netzwerk und der Vorrichtung;
Sidelinkbedingungen zwischen der mit der Vorrichtung verknüpften Weiterleitungsteilnehmereinrichtung und der Vorrichtung;
einer Anzeige der Nichtverfügbarkeit, die von der mit der Vorrichtung verknüpften Weiterleitungsteilnehmereinrichtung empfangen wird; und
einer Standarddauer der Nichtverfügbarkeit der mit der Vorrichtung verknüpften Weiterleitungsteilnehmereinrichtung.

9. Vorrichtung nach einem der Ansprüche 2 bis 8, wobei das Bestimmen der erwarteten Dauer der Nichtverfügbarkeit der mit der Vorrichtung verknüpften Weiterleitungsteilnehmereinrichtung Folgendes umfasst:
Bestimmen, dass die erwartete Dauer der Nichtverfügbarkeit der mit der Vorrichtung verknüpften Weiterleitungsteilnehmereinrichtung gleich einer Dauer T1 ist, wenn die Downlinkbedingungen zwischen dem Netzwerk und der Vorrichtung größer sind als ein oberer Schwellwert;
Bestimmen, dass die erwartete Dauer der Nichtverfügbarkeit der mit der Vorrichtung verknüpften Weiterleitungsteilnehmereinrichtung gleich einer Dauer T2 ist, wenn die Downlinkbedingungen zwischen dem Netzwerk und der Vorrichtung kleiner sind als der obere Schwellwert und größer oder gleich einem unteren Schwellwert, wobei die Dauer T2 größer ist als die Dauer T1; und
Bestimmen, dass die erwartete Dauer der Nichtverfügbarkeit der mit der Vorrichtung verknüpften Weiterleitungsteilnehmereinrichtung gleich einer Dauer T3 ist, wenn die Downlinkbedingungen zwischen dem Netzwerk und der Vorrichtung kleiner sind als der untere Schwellwert, wobei die Dauer T3 größer ist als die Dauer T2.

10. Vorrichtung nach einem der Ansprüche 2 bis 8, wobei das Bestimmen der erwarteten Dauer der Nichtverfügbarkeit der mit der Vorrichtung verknüpften Weiterleitungsteilnehmereinrichtung Folgendes umfasst:
Bestimmen der erwarteten Dauer der Nichtverfügbarkeit der mit der Vorrichtung verknüpften Weiterleitungsteilnehmereinrichtung auf Basis von Variationen der Downlinkbedingungen zwischen dem Netzwerk und der Vorrichtung und einer Mobilität der Vorrichtung und der mit der Vorrichtung verknüpften Weiterleitungsteilnehmereinrichtung.

11. Vorrichtung nach einem der Ansprüche 2 bis 10, wobei die erschwingliche Verzögerung des Erlangens eines Netzwerkzugangs auf mindestens einem von Folgendem basiert:
einer Dienstqualitätsklasse;
einem Paketverzögerungsbudget oder Daten, die von der Vorrichtung zu senden sind;
Downlinkbedingungen zwischen dem Netzwerk und der Vorrichtung;
Sidelinkbedingungen zwischen der mit der Vorrichtung verknüpften Weiterleitungsteilnehmereinrichtung und der Vorrichtung; und
einem Zustand der Vorrichtung.

12. Vorrichtung nach Anspruch 11, wobei das Bestimmen der erschwinglichen Verzögerung des Erlangens eines Netzwerkzugangs Folgendes umfasst:
Bestimmen, dass die erschwingliche Verzögerung des Erlangens eines Netzwerkzugangs gleich einer Dauer t1 ist, wenn eine Dienstqualitätsklasse eine größte Mühe ist;
Bestimmen, dass die erschwingliche Verzögerung des Erlangens eines Netzwerkzugangs gleich einer Dauer t2 ist, wenn die Dienstqualitätsklasse moderat zeitsensitiv ist, wobei t2 kleiner als oder gleich t1 ist; und
Bestimmen, dass die erschwingliche Verzögerung des Erlangens eines Netzwerkzugangs gleich einer Dauer t3 ist, wenn die Dienstqualitätsklasse stark zeitsensitiv ist, wobei t3 größer als oder gleich null und kleiner als oder gleich t2 ist.

13. Vorrichtung nach einem der Ansprüche 1 bis 14, wobei die Zeitperiode das Minimum einer erwarteten Dauer der Nichtverfügbarkeit der mit der Vorrichtung verknüpften Weiterleitungsteilnehmereinrichtung und eine erschwingliche Verzögerung des Erlangens eines Netzwerkzugangs zusätzlich zu einer erwarteten Verzögerung eines direkten Netzwerkzugangs und/oder einer Verzögerung eines indirekten Netzwerkzugangs via eine andere mit der Vorrichtung verknüpfte Weiterleitungsteilnehmereinrichtung ist.

14. Verfahren, das Folgendes umfasst:
Bestimmen (800), dass eine mit der Vorrichtung verknüpfte Weiterleitungsteilnehmereinrichtung nicht verfügbar ist;
Unterlassen (802) des Versuchens eines direkten Netzwerkzugangs und/oder eines indirekten Netzwerkzugangs während einer Zeitperiode via eine andere nicht mit der Vorrichtung verknüpfte Weiterleitungsteilnehmereinrichtung; und
Versuchen (804) von mindestens einem indirekten Netzwerkzugang während der Zeitperiode via die mit der Vorrichtung verknüpfte Weiterleitungsteilnehmereinrichtung.

15. Computerprogramm, das computerausführbare Anweisungen umfasst, die, wenn sie auf einem oder mehreren Prozessoren ausgeführt werden, die Schritte des Verfahrens nach Anspruch 14 durchführen.

## Revendications

1. Appareil comprenant :
des moyens pour déterminer (800) qu'un équipement utilisateur relais associé à l'appareil n'est pas disponible ;
des moyens pour s'abstenir (802) de tenter tout accès direct au réseau et/ou tout accès indirect au réseau via un autre équipement utilisateur relais non associé à l'appareil pendant une période de temps ; et
des moyens pour tenter (804) au moins un accès indirect au réseau via l'équipement utilisateur relais associé à l'appareil pendant la période de temps.

2. Appareil selon la revendication 1, comprenant :
en déterminant qu'une durée attendue de l'indisponibilité de l'équipement utilisateur relais associé à l'appareil est inférieure à un premier seuil et qu'un délai abordable pour obtenir un accès au réseau est supérieur à un deuxième seuil,
des moyens pour s'abstenir de tenter tout accès direct au réseau et/ou tout accès indirect au réseau via l'autre équipement utilisateur relais non associé à l'appareil pendant la période de temps ; et
des moyens pour tenter au moins un accès indirect au réseau via l'équipement utilisateur relais associé à l'appareil pendant la période de temps.

3. Appareil selon la revendication 2, comprenant :
des moyens pour tenter l'accès direct au réseau et/ou l'accès indirect au réseau via l'autre équipement utilisateur relais non associé à l'appareil après la période de temps, en réponse à l'échec de l'accès indirect au réseau via l'équipement utilisateur relais associé à l'appareil pendant la période de temps.

4. Appareil selon la revendication 2 ou la revendication 3, comprenant :
en déterminant que la durée attendue de l'indisponibilité de l'équipement utilisateur relais associé à l'appareil est supérieure au premier seuil ou que le délai abordable pour obtenir un accès au réseau est inférieur au deuxième seuil,
des moyens pour tenter un accès direct au réseau et/ou un accès indirect au réseau via un autre équipement utilisateur relais non associé à l'appareil pendant la période de temps ; et
des moyens pour s'abstenir de tenter au moins un accès indirect au réseau via l'équipement utilisateur relais associé à l'appareil pendant la période de temps.

5. Appareil selon l'une des revendications 1 à 4, dans lequel la détermination de l'indisponibilité de l'équipement utilisateur relais associé à l'appareil comprend :
la détermination de la non réception d'une annonce de recherche de relais provenant de l'équipement utilisateur relais associé à l'appareil.

6. Appareil selon l'une des revendications 1 à 5, dans lequel la détermination de l'indisponibilité de l'équipement utilisateur relais associé à l'appareil comprend :
la détermination de la réception d'une annonce de recherche de relais provenant de l'équipement utilisateur relais associé à l'appareil ;
l'envoi d'une sollicitation de recherche de relais à l'équipement utilisateur relais associé à l'appareil ; et
la réception d'une réponse à la sollicitation de recherche de relais indiquant que l'équipement utilisateur relais associé à l'appareil n'est pas disponible, ou la détermination de la réception d'une réponse à la sollicitation de recherche de relais.

7. Appareil selon l'une des revendications 1 à 6, dans lequel la période de temps est basée sur au moins l'un parmi :
une durée attendue de l'indisponibilité de l'équipement utilisateur relais associé à l'appareil ;
un délai abordable pour obtenir un accès au réseau ;
des conditions de liaison descendante entre le réseau et l'appareil ;
des conditions de liaison latérale entre l'équipement utilisateur relais associé à l'appareil et l'appareil ; et
une quantité de données à envoyer par l'appareil.

8. Appareil selon l'une des revendications 1 à 7, dans lequel la durée attendue de l'indisponibilité de l'équipement utilisateur relais associé à l'appareil est basée sur au moins l'un parmi :
le fait que l'association entre l'appareil et l'équipement utilisateur relais associé à l'appareil soit ou non une association permanente ou semi-permanente ;
un historique des opérations entre l'appareil et l'équipement utilisateur relais associé à l'appareil ;
des conditions de liaison descendante entre le réseau et l'appareil ;
des conditions de liaison latérale entre l'équipement utilisateur relais associé à l'appareil et l'appareil ;
une indication de l'indisponibilité reçue de l'équipement utilisateur relais associé à l'appareil ; et
une durée par défaut de l'indisponibilité de l'équipement utilisateur relais associé à l'appareil.

9. Appareil selon l'une des revendications 2 à 8, dans lequel la détermination de la durée attendue de l'indisponibilité de l'équipement utilisateur relais associé à l'appareil comprend :
la détermination du fait que la durée attendue de l'indisponibilité de l'équipement utilisateur relais associé à l'appareil est égale à une durée T1 si les conditions de liaison descendante entre le réseau et l'appareil sont supérieures à un seuil supérieur ;
la détermination du fait que la durée attendue de l'indisponibilité de l'équipement utilisateur relais associé à l'appareil est égale à une durée T2 si les conditions de liaison descendante entre le réseau et l'appareil sont inférieures au seuil supérieur et supérieures ou égales à un seuil inférieur, la durée T2 étant supérieure à la durée T1 ; et
la détermination du fait que la durée attendue de l'indisponibilité de l'équipement utilisateur relais associé à l'appareil est égale à une durée T3 si les conditions de liaison descendante entre le réseau et l'appareil sont inférieures au seuil inférieur, la durée T3 étant supérieure à la durée T2.

10. Appareil selon l'une des revendications 2 à 8, dans lequel la détermination de la durée attendue de l'indisponibilité de l'équipement utilisateur relais associé à l'appareil comprend :
la détermination de la durée attendue de l'indisponibilité de l'équipement utilisateur relais associé à l'appareil sur la base des variations des conditions de liaison descendante entre le réseau et l'appareil et de la mobilité de l'appareil et de l'équipement utilisateur relais associé à l'appareil.

11. Appareil selon l'une des revendications 2 à 10, dans lequel le délai abordable pour obtenir un accès au réseau est basé sur au moins l'un parmi :
une classe de qualité de service ;
un budget de délai de paquets de données à envoyer par l'appareil ;
des conditions de liaison descendante entre le réseau et l'appareil ;
des conditions de liaison latérale entre l'équipement utilisateur relais associé à l'appareil et l'appareil ; et
un état de l'appareil.

12. Appareil selon la revendication 11, dans lequel la détermination du délai abordable pour obtenir un accès au réseau comprend :
la détermination du fait que le délai abordable pour obtenir un accès au réseau est égal à une durée t1 si la classe de qualité de service est "meilleur effort" ;
la détermination du fait que le délai abordable pour obtenir un accès au réseau est égal à une durée t2 si la classe de qualité de service est "modérément sensible au temps", t2 étant inférieure ou égale à t1 ; et
la détermination du fait que le délai abordable pour obtenir un accès au réseau est égal à une durée t3 si la classe de qualité de service est "fortement sensible au temps", t3 étant supérieure ou égale à zéro et inférieure ou égale à t2.

13. Appareil selon l'une des revendications 1 à 14, dans lequel la période de temps est le minimum d'une durée attendue de l'indisponibilité de l'équipement utilisateur relais associé à l'appareil et d'un délai abordable pour obtenir un accès au réseau en plus d'un délai d'accès direct au réseau attendu et/ou d'un délai d'accès indirect au réseau via un autre équipement utilisateur relais non associé à l'appareil.

14. Procédé comprenant les étapes suivantes :
déterminer (800) qu'un équipement utilisateur relais associé à l'appareil n'est pas disponible ;
s'abstenir (802) de tenter tout accès direct au réseau et/ou tout accès indirect au réseau via un autre équipement utilisateur relais non associé à l'appareil pendant une période de temps ; et
tenter (804) au moins un accès indirect au réseau via l'équipement utilisateur relais associé à l'appareil pendant la période de temps.

15. Programme informatique comprenant des instructions exécutables par ordinateur qui, lorsqu'elles sont exécutées sur un ou plusieurs processeurs, réalisent les étapes du procédé selon la revendication 14.
